# EUROPEAN PATENT SPECIFICATION

(11) **EP 4 587 628 B1**
(45) Date of publication and mention of the grant of the patent: **13.05.2026**
(21) Application number: 23789441.5
(22) Date of filing: 14.09.2023
(51) Int. Cl.: D04H 1/413, D04H 1/4209, D04H 1/4218, D04H 1/4326, D04H 1/4342, D04H 1/58, D04H 1/732, H01M 10/625, H01M 10/658

(54) **AEROGEL COMPOSITION FOR THERMAL INSULATION**
AEROGELZUSAMMENSETZUNG ZUR WÄRMEDÄMMUNG
COMPOSITION D'AÉROGEL POUR ISOLATION THERMIQUE

(30) Priority: 16.09.2022 US 202263407202 P; 09.02.2023 US 202363484033 P
(43) Date of publication of application: 23.07.2025
(73) Proprietor: Cabot Corporation, Boston MA 02210 (US)
(72) Inventor: ZHANG, Xiaofeng, Billerica, Massachusetts 01821 (US); SULLIVAN, Sean S., Billerica, Massachusetts 01821 (US); GAMBLE, Jeffrey, Billerica, Massachusetts 01821 (US); PESCATORE, Peter F., Billerica, Massachusetts 01821 (US); BANNON, Clare, Billerica, Massachusetts 01821 (US); CHOUDHARY, Saeed, Billerica, Massachusetts 01821 (US)
(74) Representative: Grünecker Patent- und Rechtsanwälte PartG mbB
(86) International application number: PCT/US2023/074148
(87) International publication number: WO 2024/059682

(56) References cited:
- EP-A1- 3 719 922
- WO-A1-2022/024076
- US-A1- 2020 295 328
- US-B2- 9 399 864

## Description

### RELATED APPLICATIONS

This application claims priority from US Provisional Applications 63/407,202, filed September 16, 2022 and 63/484,033, filed February 9, 2023.

### BACKGROUND OF THE INVENTION

Aerogel particles can have a very low density, high porosity, and small pore diameters. Aerogels, and in particular silica aerogels, exhibit low density and low thermal conductivity, making them useful as insulative materials. Aerogels can be formed by removing solvent from hydrogels, such as through supercritical drying techniques or via solvent substitution combined with ambient pressure drying. Silica aerogels are typically hydrophilic but can be rendered hydrophobic through the use of specific treating agents.

In the broadest sense, i.e., when regarded as "gels with air as the dispersant," aerogels are manufactured by drying a suitable gel. When used in this sense, the term "aerogel" includes aerogels in the narrower sense, such as xerogels and cryogels. A gel is designated as an aerogel in the narrower sense if the liquid is removed from the gel at temperatures above the critical temperature and starting from pressures that are above the critical pressure. In contrast to this, if the liquid is removed from the gel sub-critically, for example with the formation of a liquid-vapor boundary phase, then the resulting gel is, in many instances, referred to as xerogel. It should be noted that the gels according to the present invention are aerogels in the sense that they are gels with air as the dispersing media.

Due to their excellent insulating properties, aerogels have been incorporated in various types of articles, including heat control articles (sheets, pads or blankets, for example) designed for applications such as construction, refrigeration, pipe transport and others. One application of increased interest relates to the insulation of rechargeable batteries in electrical vehicles (EV).

US9399864 discloses a wet laid aerogel blanket produced from a slurry of aerogel particles with a polymer binder. CN112430018 discloses a fiber paper that is impregnated with aerogel that is retained by a silica binder. CN112522949 discloses an aerogel mat in which an aerogel slurry is injected into a glass fiber mat which is then immersed in a slurry containing a polymer curing agent. CN112681009 discloses a two layer paper system that is impregnated with an organic solution of silica aerogel. WO2022/024076 discloses a thermal runaway barrier for an electric vehicle battery, comprising a wet-laid nonwoven mat containing alkali silicate fibers, bicomponent fibers, adhesive and aerogel particles.

Still, there is a need for a thin aerogel blanket that maintains thermal conductivity and tensile strength and has reduced amounts of components such as binders that can degrade thermal insulation performance and contribute to flammability.

### SUMMARY OF THE INVENTION

It has been found that insulation spacers for EV applications often encounter challenges related to the tendency of battery cells to expand and contract during charging and discharging during the vehicle's lifetime.

Thus, a need exists for approaches that address at least some of the issues surrounding the insulation of rechargeable batteries in electric vehicles. Particularly desired are insulating blankets that display good thermal insulation properties and various mechanical properties. For example, it is desirable that insulation spacers be sufficiently mechanically robust to withstand handling (e.g., during installation) and the mechanical challenges of operation and that they may not be too rigid or incompressible.

The present invention relates to a heat control article, in the form of a nonwoven blanket, sheet, mat or pad, as defined in claim 1.

The present invention further relates to a method of making a heat control article, in the form of a nonwoven blanket, sheet, mat or pad, as defined in claim 9.

Particular embodiments are defined in the dependent claims.

Many of the embodiments described herein relate to a heat control article that is a flexible insulating member such as, for example, a non-woven blanket, sheet, pad, mat and the like. The article can be manufactured by a wet laid technique from a composition that contains aerogel particles and other materials.

In some embodiments, an aerogel composition includes aerogel particles and a fibrous component that includes one or more materials selected from the group consisting of polymer fibers and inorganic fibers. The ratio of the aerogel particles:fibrous component is from 1:3 to 10:1 by weight. The aerogel composition further includes up to 25 % of polymer by weight, based on the total weight of the composition.

The composition can further include materials such as IR opacifiers, flame or fire retardants, heat absorbers, processing aids, and so forth. Binders, water, dispersants, emulsifiers, flocculating agents, etc. can be included as needed in the manufacture of the heat control article.

The composition can be used to prepare a non-woven blanket, pad, or other article e.g., by a wet laid process, and is believed to bring about significant benefits to the finished product. Thus, heat control articles described herein can have excellent insulating properties, e.g., to reduce heat propagation from a battery cell experiencing thermal runaway to neighboring cells or other battery components. The composition is preferably non-flammable, producing an article that will pass the UL94-V0 test or other flammability/combustibility tests.

Additional benefits imparted to the final article may include increased flexibility, compressibility, elasticity, tensile strength, and impact resistance. Allowing the battery encasement to expand and contract, these articles contribute to mitigating the effects of dimension changes of the battery compartment (e.g., cells, modules and packs), reducing the wear-and-tear this type of cycling can have on the battery materials.

The above and other features of the invention including various details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### DETAILED DESCRIPTION OF THE PREFERRED EMBODIMENTS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

It will be understood that although terms such as "first" and "second" are used herein to describe various elements, these elements should not be limited by these terms. These terms are only used to distinguish one element from another element. Thus, an element discussed below could be termed a second element, and similarly, a second element may be termed a first element without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. All proportions and percentages are on a weight basis unless otherwise indicated.

The invention relates to a heat control article that can be a flexible member such as a blanket, sheet, mat, pad, to name a few. In one example, the article is a flexible non-woven blanket. The aerogel composition includes aerogel particles and a fibrous component that includes one or more materials selected from the group consisting of polymer fibers and inorganic fibers. The ratio of the aerogel particles:fibrous component is from 1:3 to 10:1 by weight. The aerogel composition further includes 3-25 % of polymer by weight, based on the total weight of the composition. The composition has a thickness of 0.3 to 6 mm, a thermal conductivity up to 32 mW/m.K at 25 °C, a UL-94 rating of V0, a tensile strength from 0.09 to 5 MPa, and a density of 0.1-0.6 g/cm³.

The aerogel is a silica aerogel in particulate form. Any type of silica aerogel particle(s) can be used. Aerogels may be formed as described in US7470725. Suitable aerogels can be made from waterglass or from organic materials such as TEOS and TMOS. To reduce the radiative contribution to thermal conductivity, the aerogel particles can incorporate IR opacifiers, such as carbon black, alumina, graphite, titanium dioxide, iron oxide, silicon carbide, zirconium dioxide, or mixtures thereof. Aerogel particles are available from a variety of sources, including from Cabot Corporation under the ENOVA and ENTERA brands and from JIOS Aerogel under the AEROVA brand.

The silica aerogel can have particle sizes in a range from 0.1 mm to 5 mm, for example, from 0.1 mm to 4 mm, from 0.1 to 0.5 mm, from 0.1 mm to 1 mm, from 0.1 mm to 1.5 mm, or from 1 mm to 4 mm. The aerogels can have narrow or wide particle size distributions and can be in the form of comminuted powders. The diameter of an aerogel particle may be measured along the longest cross sectional line in a given particle, or particle size ranges may be measured by sieving.

The silica aerogel particles are hydrophobic, exhibiting a water contact angle of greater than 90 degrees. Examples of commercially available such aerogels are ENOVA^{®} brand aerogels, ENTERA^{®} brand aerogels, and IC3110, P100, P150, and P200 aerogels, all from Cabot Corporation.

Some implementations utilize a mixture of silica aerogel and hydrophobic silica aerogel.

Aerogel particles are also commercially available as mixtures with opacifiers such as carbon black.

In some embodiments, the aerogel particles have porosities greater than about 60% and densities of less than about 0.4 g/cc. In other embodiments, aerogel particles have densities of from about 0.05 to about 0.15 g/cc.

The thermal conductivity of the aerogel particles at 25 °C can be less than about 40 mW/m·K, less than about 25 mW/m·K, or from about 12 mW/m·K to about 18 mW/m·K, or lower. To reduce flammability, the aerogel particles may be low calorie aerogels, such as those having a caloric content of, for example, less than 10 MJ/kg, less than 8 MJ/kg, less than 7 MJ/kg or less than 6 MJ/kg.

As the aerogel is preferably pre-formed (prepared prior to the fabrication of the aerogel-containing heat control article), any desirable aerogel structure, morphology, or other characteristic can be chosen, and this characteristic can often persist into the final product. The amount of aerogel in the composition or the heat control member may be 15-65% by weight, for example, from 20 to 60 wt%, from 25-55 wt%, from 30 to 50 wt%, or from 35 to 45 wt%.

In addition to the aerogel component, the composition described herein further includes one or more other ingredients. In many cases, these ingredients or components are selected to bring about specific functions and/or properties to the final articles (e.g., a blanket). In some cases, the types and/or amounts of added ingredients are selected to achieves a balance or compromise between desirable versus less desirable contributions the ingredient might make to the final product. Manufacturing parameters, final applications or other factors can be considered in selecting types and/or amounts of ingredients to be employed.

Among the ingredients that, when added to aerogels, can affect properties of the finished article are fibrous materials. Fibrous materials may be present in an amount of 5 - 55 wt%, for example, 10-50 wt%, 15-40 wt%, 20 to 35 wt%, or 10 to 30 wt% with respect to the total weight of the aerogel composition or heat control article. Specific implementations utilize a fibrous component that includes inorganic fibers and/or a polymeric fiber that is temperature resistant. Exemplary inorganic fibers include include ceramic wool, ceramic fibers, and glass fibers. Examples of polymeric fibers include polybenzimidazole (PBI), an aromatic polyamide (aramid) or any combination thereof.

Whereas ceramic fibers are typically made by a drawing process, then chopped to a desired length, a ceramic "wool" (or other types of wool, such as mineral wool, also sometimes referred to as "stone" wool) is often made by spinning a melt. Generally, wools tend to have longer, more entangle-prone fibers. Individually, a wool fiber may not be any stronger than a shorter ceramic fiber (made by drawing and chopping). In bulk, however, wools may have an additive effect that can improve the mechanical integrity of the composition and/or the heat control article.

In many cases, the diameter of a wool fiber is within a range of from about 1 micron (µm) to several hundreds of microns. Fiber length can be within a range of from about 100 µm to several hundreds of µm or longer, sometimes several hundreds of millimeters (mm) long.

These high aspect ratio wools also have the effect of improving drainage and retention in a wet laid article, as they provide extra surface area for well-dispersed active materials to aggregate during coagulation processes. This reduces the amount of active material that is removed with the excess process water during forming processes.

Amounts of ceramic wool that can be employed often will depend on desired properties (e.g., tensile strength, tear resistance, impact resistance), intended use and/or other factors. Ceramic wools can be provided in an amount within a range of 0.5 to 100 wt % (relative to the weight of the fibrous component utilized to prepare the composition). In illustrative examples, it is present in an amount within a range of from about 5 to about 30 wt%. For instance, it can be present in the fibrous component in an amount of from about 10 to about 20 wt %.

Relative to the finished article, e.g., a blanket, ceramic wools can be present in the end product in an amount within a range of 0.25% to 4wt% of the weight of the article, e.g., from about 0.5 to about 2 wt %, such as, for instance, within a range of from about 0.5 to about 1.0; from about 0.5 to about 1.5; from about 0.5 to about 2.0 wt %; or within a range of from about 1.0 to about 1.5; from about 1.0 to about 2 wt %; or from about 1.5 to about 2.0 wt%.

Suitable ceramic wools include aluminum (provided as Al₂O₃), silicon (in the form of SiO₂) and iron (in Fe₂O₃) or combinations of any of these. Some ceramic wools can also include titania (TiO₂) in addition to or in place of any of these components.

While not a required element, the presence of zirconium can bring about mechanical benefits and/or can contribute to the temperature resistance of the final aerogel composition and/or heat control article (e.g., a blanket). In some implementations, zirconium (typically in the form of zirconium oxide (ZrO₂) is provided in a zirconium containing wool that can also include other elements such as aluminum, silicon, iron and/or titanium. Commercially, Ceramaterials (Dingmans Ferry, PA) provides two types of spun fibers, one with a higher zirconia concentration (with temperature resistance up to 2600°F/1400°C) and one with lower zirconia loading (2300°F/1400°C).

In a finished product, a blanket, for instance, ceramic wools can be identified by analytical techniques such as high resolution microscopy of a uniform cross section of the sample product, e.g., a blanket. It is believed that, even after processing operations, ceramic wools would retain a differentiated conformation compared to a chopped ceramic fibers. Other techniques that may be applicable include Scanning Electron Microscopy (SEM) using Energy Dispersive X-ray (EDX) capability (often abbreviated as "SEM/EDX"), correlating elements typical in concentration to ceramic wools as differentiated from other types of fibers.

Another type of wool that can be employed to prepare the composition described herein is mineral wool (also known in some instances as "stone" wool). Mineral wool is commercially available from Rockwool A/S under the trade name of "Rockwool^{®}" mineral wool, from Knauf Insulation (Shelbyville, IN, USA), and from other suppliers. Amounts of mineral wool can be the same or similar to those used in the case of ceramic wools. Other ranges can be employed, however.

Mineral wool can be identified in a finished article, e.g., a blanket, by techniques such as Scanning Electron Microscopy (SEM) using Energy Dispersive X-ray (EDX) capability (Often abbreviated as "SEM/EDX"), correlating elements typical in concentration to mineral wools as differentiated from other types of fibers.

In some embodiments, the composition described herein contains temperature resistant polymeric materials in various forms. Some approaches utilize aramid fibers that can be defined as "pulp" (between 0.1-6 mm) or short cut fibers (>6 mm). Aramid short cut fibers and pulp are widely available, with the major worldwide manufacturer being Dupont (under the Kevlar^{®} tradename). Alternatively or in addition, longer aramid fibers, cut to lengths such as 3 mm, 6 mm, or 12 mm, may also be employed.

Other approaches utilize polybenzimidazole (PBI) fibers, typically characterized by excellent heat and chemical resistance. As PBI fibers have no discernible melting point, they do not ignite or drip when exposed to high temperatures. PBI fibers can be purchased from PBI Performance Products (Charlotte, NC). PBI fibers may be at least .1 mm long, e.g., from 0.5 to 10 mm, from 1-8 mm, or from 2-6 mm.

Materials such as aramid or PBI fibers are believed to be particularly useful in addressing the swelling and contraction observed with battery packages charging or discharging under hot or cold conditions. Allowing the battery encasement to expand alleviates pressure on the battery compartment, reducing wear and tear on battery materials.

While still imparting these advantageous properties, these polymeric fibers are typically used in amounts that are as low as possible, as their addition can compromise a desired low flammability rating of the finished article, e.g., blanket.

PBI and/or aramid fibers can be provided in amounts within a range of from about 0.5 to 100 wt % (relative to the weight of the fibrous component utilized to prepare the composition). In illustrative examples, they are present in an amount within a range of from about 5 to about 30 wt% or from 25% to 80%. For instance, they can be present in the fibrous component in an amount of from about 10 to about 20 wt %.

In many cases, fibers such as aramid or PBI are used in amounts of 0.25% to 4% (based on the weight of the aerogel composition or heat control article), e.g., from about 0.5 to about 2 wt %, such as, for instance, within a range of from about 0.5 to about 1.0 wt %; from about 0.5 to about 1.5 wt%; from about 0.5 to about 2.0 wt %; or within a range of from about 1.0 to about 1.5 wt %; from about 1.0 to about 2 wt %; or from about 1.5 to about 2.0 wt%.

In a finished product, e.g., a blanket, aramid or PBI fibers can be identified by techniques such as SEM/EDX, differentiating the polymeric structures from the surrounding inorganic environment.

Ceramic fibers are known for their good corrosion resistance as well as good oxidation resistance at high temperatures. Generally, ceramic fibers are characterized by a polycrystalline (rather than amorphous) structure. Some, e.g., refractory ceramic fibers, are particularly useful as thermal insulating materials for high temperature applications. In some embodiments, the ceramic fibers represent the major ingredient (more than 50 % by weight relative to the total weight of the fibrous component).

Suitable chopped ceramic fibers that can be employed in the composition described herein include one or several (two, three, four or more) inorganic oxides, such as Al₂O₃, B₂O₃, Na₂O, K₂O, CaO and MgO. Some fibers may also include silicon oxides. Many types of ceramic fibers, often well characterized with respect to composition, length and/or other properties, are available commercially. Suitable chopped ceramic fibers include but are not limited to 7000 and 6000 series fibers from Unifrax. In one example, the ceramic fibers are a high purity alumina-silica product coarsely chopped from Unifrax. Ceramic fibers may have a variety of diameters, e.g., 1.5-2.5 microns, and may be chopped to specific lengths or available in non-uniform lengths, including mixtures of shot (unfiberized material) with longer fibers. In some embodiments, a collection of ceramic fibers may contain as much as 45-55% shot. For the purposes of the present disclosure, shot, when present, is still counted as a portion of the fibrous material in the aerogel composition or heat control member.

Alternatively or in addition, glass or other fibers may be used, either alone or in combination with one or more of the ceramic fibers and/or the ceramic wools, aramid and/or PBI fibers described above. Illustrative glass fibers include: borosilicate (B Fiber), acid resistant borosilicate (C Fiber), and calcium aluminoborosilicate (E Fiber), which can be obtained, for example, from Lauscha Fiber International or Unifrax; and/or fibers that consist essentially of silica (Q fibers), which can be obtained, for example, from Johns Manville. Glass fibers may be cut to a variety of lengths, such as 3 mm, 6 mm, or 12 mm, or may be used as "shot". Glass fibers may have a variety of diameters from 0.25 microns to 12 microns, such as from 0.25 microns to 0.5 micron, 0.5 to 1.5 microns, 1.5 to 2.5 microns, 1 micron to 5 microns or from 8 microns to 12 microns, for example, 6, 9 or 12 microns. Alternatively or in addition, more than one type of glass fiber, e.g., cut to more than one length or diameter, may be used, for example, blends of fibers with diameters less than 1 micron with fibers having diameters greater than 5 microns. Silica gel fiber is produced by spinning a gelled silica sol, for example, as described in US20200308729, the entire contents of which are incorporated herein by reference.

Other fibers that can be added to the ceramic fibers, glass fibers, ceramic wools and/or the polymeric fibers such as PBI or aramid include non-ceramic fibers such as cellulose, cotton, carbon, acrylic, polyvinyl alcohol (PVA), phenolic, polyolefin and/or other types of fibers, as well as mixtures of such fibers.

The fibers employed may be in any configuration known to those of skill in the art. For instance, the fibers may be in the form of chopped fiber, microfibers, woven fibers, or non-woven fibers.

The shape of the fiber cross section can be round, polygonal, trilobal, pentalobal, octalobal, in the form of strips, fir trees, dumb bells, or other shape. Fibers may have consistent or varying diameters along the length of the fiber. Hollow fibers can be used in some embodiments. Additionally, the fiber materials can be smooth or crimped and may be curled or straight.

Coated fibers are employed in some embodiments. Polyester fibers metallized with a metal such as aluminum are one example.

Also suitable are fibers modified by additives. Examples of such additives include but are not limited to: anti-static agents such as carbon black, for instance; and/or IR opacifiers (typically used to reduce the radiation contribution to thermal conductivity) such as carbon black, titanium dioxide, alumina, iron oxide, or zirconium dioxide, silicon carbide, or any mixtures thereof.

In addition to including IR opacifiers, the radiation contribution to the thermal conductivity can be further reduced by using blackened fibers, such as polyester fibers blackened with carbon black or simply carbon fibers.

The amount of the fibrous component (either one fiber or a blend of fibers) used depends on its density, diameter, length, etc. and can be from 1 wt% to 99 wt%, preferably 5 to 55 wt%, for example, 10-50 wt%, 15-40 wt%, 20 to 35 wt%, or 10 to 30 wt%. with respect to the weight of the aerogel composition. The mass ratio of the aerogel component to the fibrous component is within a range of from 1:3 to 10:1 by weight, e.g., from 1:2 to 10:1, from 1:3 to 3:1, from 1:2 to 2:1, from 1:1 to 10:1, from 1.2:1 to 9:1, from 1:2 to 9:1, or from 1:1 to 5:1. When the relative amount of fibrous component is too great, the thermal conductivity of the aerogel composition and/or heat control article may be too high. When the relative amount of fibrous component is too small, the tensile strength of the aerogel composition and/or heat control article may be too low.

Blends of fibers may also be used. For example, a first fiber that is selected to provide mechanical strength may be used in combination with a second fiber that functions to retain the aerogel and other particulates such as opacifiers in the blanket. The first fiber is typically a glass or ceramic fiber, while the second fiber is typically a fiber with a higher aspect ratio but may be a longer glass or ceramic fiber. Alternatively or in addition, a third fiber may be included to enhance particular mechanical properties. For example, addition of polymer fibers as the third fiber may enhance the flexibility of the aerogel blanket.

While the wools and/or temperature resistant polymeric fibers described herein could represent the entire fiber component in the composition, they are often used in conjunction with glass or ceramic fibers. In many cases, the glass or ceramic fibers may actually represent the major fibrous ingredient (more than 50% by weight relative to the total weight of the fibrous component) and can be thought of as the "primary" fiber employed in the composition. In such situations, the term "secondary" can be applied to the ceramic wools and/or the temperature resistant polymeric fibers (e.g., PBI, aramid) in the composition. Alternatively, PBI or aramid fibers may represent the major fibrous ingredient. Alternatively or in addition, blends of glass and ceramic fibers may also be used (e.g., with ceramic or glass as the primary fiber and the other as the secondary fiber), and, in general, any of the fibers or wools disclosed herein may be combined with one or more of the others. In certain embodiments, the ratio of primary fibers and secondary fibers by weight is 100:1 to 1:100, for example, 50:1 to 1:50, 35:1 to 1:35, 25:1 to 1:25, 15:1 to 1:15, 10:1 to 1:10, 7:1 to 1:7, 5:1 to 1:5, 4:1 to 1:4, 3:1 to 1:3, or 2:1 to 1:2. In specific implementations, glass or ceramic fibers are used alone or in weight ratios from 1:4 to 10:1 with aramid fibers, for example, from 1:3 to 5:1, from 1:2 to 3:1, or from 1:1 to 2:1. Alternatively or in addition, different types of glass fibers, for example glass fibers having a diameter of 5-10 microns are used in combination with glass microfibers having a diameter of less than one micron in a weight ratio (larger diameter: smaller diameter) of 5:1 to 1:5, for example, 4:1 to 1:4, 2:1 to 1:2, or 1:5 to 1 to 1: 1.5. Alternatively or in addition, ceramic microfibers are the primary fiber and glass fibers or microfibers are the secondary fiber. Alternatively or in addition, combinations of three or more types of fibers are used, for example, ceramic microfibers (less than 5 microns in diameter, or less than 3 microns in diameter), are used in combination with two or more of glass fibers having a diameter of 5-10 microns, glass fibers having a diameter of less than five microns or less than 1 micron, aramid fibers, and PBI fibers. Alternatively or in addition, glass fibers used in fabrication of the aerogel compositions or heat control members are chopped to 6 microns or less or 3 microns or less.

The length and diameter of the fibers, e.g., glass or ceramic fibers, can vary with the specific application. Thinner fibers such as microfibers (diameter less than 5 microns or less than 1 micron), for example, can add flexibility, while the length and/or distribution of the fibers can play a role in increasing the mechanical strength of the final product, a blanket, for example. In illustrative examples, fibers are cut to lengths of 3 mm, 6mm, or 12 mm or other commercially available lengths. Two or more different types of fibers or fibers made of the same material but characterized by different fiber lengths, length distribution, diameter, or diameter distribution can be used to obtain a bimodal or multimodal length or diameter distribution of fibers.

In some embodiments, the composition includes elastomeric particles, for example, silicone particles, rubber powder, or thermoplastic microspheres. Such materials are believed to potentially improve both the reinforcement and elasticity of the finished article, e.g., a blanket. Elastomeric particles may be solid, hollow, and/or resin coated. For the purposes of the present description, elastomeric powders or particles are categorized with the other particulate components of the composition such as opacifiers, and not with the polymeric components such as dispersants, surfactants, flocculation aids, defoamers, and binders.

Silicone powders or particles of various average particle size (avg PS), e.g., within a range of from about 1 micron to 1 mm in diameter, are commercially available. As one example, a supplier such as Shin Etsu Silicones, provides suitable elastic particles under their Silicone Powder KMP series. For instance, particles with an avg PS of 13 µm are available under product code KMP-598, while product KMP-402 provides a PS = 30 µm.

Suitable amounts that can be employed can be determined taking into account desired properties, manufacturing parameters and/or other factors. In some implementations, silicone particles are provided in a ratio of up to 1:1 relative to the aerogel component, for example, from 1:10 to 1:1, from 1:8 to 1:2, or from 1:6 to 1:3.

Silicone rubber particles can be employed in conjunction with one or more inorganic fibers and/or wools and/or temperature resistant polymeric fibers described herein. For example, they can be combined with the aerogel particles, with one or more inorganic fibers and/or one or more of the ceramic wool, aramid fibers and/or PBI fibers. Alternatively, silicone particles can be used in compositions that do not include a ceramic wool or a polymeric fiber such as aramid or PBI.

In many embodiments, the composition described herein includes opacifiers, such as infrared (IR) opacifiers, to reduce radiative heat transfer. These materials reduce the transmission of infrared radiation and can include, for instance, carbon black, mica, alumina, graphite, titanium dioxide, rutile sand, iron oxide, silicon carbide (SiC), graphite or zirconium dioxide. Some suitable types of titanium dioxide include, for example, Tipure^{®} (DuPont) and Altiris^{®} (Huntsman). IR opacifiers may be used individually or as mixtures of two or more compounds. The size of the particles may be selected to reflect particular wavelengths. For example, for ceramic opacifiers such as titanium dioxide, particles less than 1 micron as measured by laser diffraction may block visible light more efficiently than IR radiation, while thermal conductivity of the particles may increase at larger particles sizes, e.g., greater than 3 microns. In another example, silicon carbide is available with grit sizes (Federation of European Producers of Adhesives) from F230 to F2000, for example, F500, F600, F800, F1000, F1200, and F1500.

IR opacifiers can be added in amounts selected to provide a target level of IR transmission reduction in the aerogel composition and/or heat control article (e.g., blanket). Illustrative such levels may be, for example, up to 10%, 0.5% to 8%, 0.75% to 5%, or 1% to 3% opacifier based on the total mass of the aerogel composition and/or heat control article. Adding opacifiers characterized by two or more different average particle sizes in a given composition may extend the range of IR wavelengths being covered.

In some embodiments, the aerogel composition and/or heat control article (e.g., blanket) can include a flame or fire retardant. Flame retardants may be, for example, alkali oxides, alkali earth metal oxides, aluminum trihydrate, magnesium hydroxide, antimony oxides, titanium dioxide, rutile sand, melamine compounds, phosphate based or halogen based compounds. In specific embodiments, titanium dioxide particles may have a diameter of about 1.18 µm as measured by laser diffration, from 0.9 to 1.3 µm, from 0.8 to 1.4 µm or from 0.5 to 4.0 µm, and in certain embodiments the particle size distribution may have a d50 of about 1.0 µm+/-0.01 µm, +/-0.02 µm or +/-0.05 µm. Halogenated flame retardants include, for example, brominated flame retardants (BFR) such as organobromide compounds including polymeric organobromide compounds. In another set of embodiments, a polymeric flame retardant has a structure with a high ratio of heteroatoms to carbon atoms. For example, in some embodiments the ratio of heteroatoms to carbon atoms may be greater than 0.5 to 1, greater than 1 to 1, or greater than 2 to 1, and in specific embodiments the heteroatoms may be nitrogen and/or sulfur. Flame and/or fire retardants can be incorporated into the aerogel composition and/or heat control article in concentrations adequate to suppress flammability or to meet specifications such as UL94-V0. Alternatively or in addition, exemplary aerogel compositions and/or heat control articles may exhibit caloric content of, for example, less than 10 MJ/kg, less than 8 MJ/kg, less than 5 MJ/kg, less than 3 MJ/kg, less than 2 MJ/kg, or less than 1 MJ/kg, for example, from 0.5 MJ/kg or 1 MJ/kg to 5 MJ/kg.

Concentrations of fire and/or flame retardant that can be employed may range, by weight, from 0.1% to 5.0%, 0.2% to 2.0%, and 0.3% to 1.5% with respect to the mass of the aerogel composition and/or heat control article. In specific implementations, the flame or fire retardant is combined with the aerogel particles, e.g., with a mixture combining silica aerogel.

Heat absorbing materials also can be employed. Such materials help the aerogel composition and/or heat control article (e.g., blanket) behave not only as an insulator, retarding heat transfer, but as a heat capacitor which can store thermal energy. Such heat absorbing materials may include aluminum hydroxide and others known to those of skill in the art. Alternatively or in addition, heat absorbing materials may include phase change materials that store heat by undergoing a thermodynamic phase transformation or a change in hydration state or crystalline structure. Suitable phase change materials include both organic materials and inorganic materials such as metals, inorganic salts, and inorganic hydrated salts. Heat absorbing materials can be combined with aerogel particles and/or hydrophobic silica aerogel or can be deposited on the surface of or otherwise impregnated into the aerogel pores.

The composition can optionally include a binder. In some situations, the binder can help prevent widespread dispersion or dissipation of the silica aerogel, hydrophobic silica-containing particles, and/or other particulate components of the aerogel composition and/or heat control article, in case of a catastrophic failure or explosion of the item being insulated, e.g., a battery. Examples of suitable binders include but are not limited to silicone, polyurethane, epoxy, polyvinyl alcohol, polyvinylidene fluoride, polyethylene terephthalate, polybutylene terephthalate, acrylate (acrylic) polymers, and so forth. Binders that include heat resistant and/or flame retardant polymers are preferred. A binder such as polyvinyl alcohol, silicone, polyurethane, styrene butadiene polymers, or an acrylate or acrylic polymer can also bind additives such as carbon black to aerogel particles to alleviate dusting during downstream processing of the aerogel composition. Exemplary commercially available binders include Joncryl FLX5201, FLX5220, FLX5026A and 1670 polymers from BASF, U4000, U4101, and APU 10120 polymers from Alberdingk Boley, Novacryl PSR300 polymer from Synthomer, and Styrofan 4306 polymer from BASF. Binders may be mixed with a portion or all the components of the mixture, including any additives incorporated into the mixture, using an impeller or other suitable apparatus known to those of skill in the art. Preferably, the binder does not render the aerogel blanket flammable under UL94 or other flammability test methods.

Processing aids also can be included. The processing aid(s) chosen will depend on the manufacturing method and form of the aerogel composition and/or heat control article. Suitable processing aids include but are not limited to defoamers, surfactants, dispersants, and emulsifiers.

Various commercial defoamers are known to those of skill in the art and are suitable for use with the aerogel compositions herein. The defoamer may be a polyol or a polyglycol, e.g., available under the Surfynol name from Evonik Industries. Alternative polyols include but are not limited to 1,3-propanediol, 1,2-butanediol, 2,3-butanediol, 1,3-butanediol, 1,4-butanediol, glycerol, trimethylolpropane, pentaerythritol, triethanolamine and trihydroxymethyl aminomethane. Alternatively or in addition, an oil-based or a fatty acid based defoamer may be employed. Alternatively or in addition, the defoamer may be a polymer based defoamer, e.g., a silicone based defoamer, such as Dehydran 1293 defoamer from BASF.

A dispersant or surfactant may be selected from ionic (anionic and cationic) surfactants and dispersants, amphoteric surfactants and dispersants, nonionic surfactants and dispersants, and high molecular weight surfactants and dispersants, for example. Suitable anionic surfactants include alkyl sulfates and higher alkyl ether sulfates, more specifically, ammonium lauryl sulfate, and sodium polyoxyethylene lauryl ether sulfate, for example. Suitable cationic surfactants include aliphatic ammonium salts and amine salts, more specifically, alkyl trimethylammonium, and polyoxyethylene alkyl amine, for example. The amphoteric surfactants may be of betain type, such as alkyl dimethyl betain, or of oxido type, such as alkyl dimethyl amine oxido, for example.

Suitable nonionic dispersants include, for example, glycerol fatty acid ester, propylene glycol fatty acid ester, sorbitan fatty acid ester, polyoxyethylene sorbitan fatty acid ester, tetraoleic acid polyoxyethylene sorbitol, polyoxyethylene alkyl ether, polyoxyethylene alkyl phenyl ether, polyoxyethylene polyoxypropylene glycol, polyoxyethylene polyoxypropylene alkyl ether, polyethylene glycol fatty acid ester, higher fatty acid alcohol ester, polyhydric alcohol fatty acid ester, polyether-modified polydimethylsiloxanes, and others.

Additional potential surfactants include AEROSOL OT (sodium di-2-ethylhexylsulfosuccinite), BARLOX 12 (a branched alkyldimethylamine oxide), BARLOX 12i (a branched alkyldimethylamine oxide), TRITON 100 (octylphenoxypolyethoxy(9-10)ethanol), TWEEN surfactants like TWEEN 100 surfactant, and BASF pluronic surfactants. Other examples of wetting agents include glycols, alkoxylates polyoxyalkylene fatty ethers, such as polyoxyethylene fatty ethers, sorbitan esters, mono and diglycerides, polyoxyethylene sorbitol esters, polymeric surfactants like Hypermen polymer surfactants, sodium coco-PG-dimonium chloride phosphate and coamidopropyl PG-dimonium chloride phosphate, phosphate esters, polyoxyethylene (POE) fatty acid esters, Renex nonionic surfactants (nonionic esters formed by reaction of ethylene oxide and unsaturated fatty acids and heterocyclic resin acids.), alcohol ethoxylates, alcohol alkoxylates, ethylene oxide/propylene oxide block copolymers, polyoxyethylene derivatives of sorbitan esters or combinations thereof. Preferred dispersants have at least one cationic or cationizable group and an HLB ratio of 2 to 20, more preferably ethylene oxide and propylene oxide oligomers in a molar ratio of ethylene oxide mers and propylene oxide mers from 0.1:1 to 11:1. Exemplary dispersants include but are not limited to Jeffamine M-2070 compound (Huntsman), a monofunctional, primary amine with a weight average molecular weight of about 2,000 and a propylene oxide/ethylene oxide (EO/PO) mol ratio of 31/10 and an HLB value of 13.8, Jeffamine M600 compound (Huntsman), a monofunctional, primary amine with a weight average molecular weight of about 600 and a propylene oxide/ethylene oxide (EO/PO) mol ratio of 1/9 and an HLB value of 2, Jeffamine ED900 compound (Huntsman), a difunctional primary amine with an EO/PO ratio just greater than 2 and a weight average molecular weight of about 900, Surfonamine L-300 compound (Huntsman), a monofunctional, primary amine with a EO/PO ratio of about 58/8, a weight average molecular weight of about 3000 and an HLB of about 17.1, and Surfonamine B-200 compound, a monofunctional, primary amine with an EO/PO ratio of about 6/29 and a weight average molecular weight of about 2000.

While in many cases ingredients can be combined in any suitable manner, techniques for incorporating some of the components can benefit from additional consideration. With fibers, for example, too little mixing energy can lead to undispersed bundles of fibers that do not efficiently improve performance. overdispersion (under unrestrained length of mixing or mixing energy), on the other hand, can lead to self-entanglement and "balling". Too much chopping and cutting energy can result in reducing the length of the fiber to a less than ideal length, affecting product attributes or performance. As for equipment, it was found that mixing operations that rely on a cutting blade with a sharp leading edge can also contribute to fiber length reductions. While on a short time scale this could be relatively benign, the effect is expected to accelerate over longer periods.

It was also found that certain properties of the material being incorporated can render the material more susceptible to "overprocessing" effects. In the case of fibers, for example, such effects become more significant for fiber lengths greater than about 6 mm (0.25 inch) and/or fine coarseness.

Thus, some embodiments described herein relate to controlling some of the mixing parameters such as time of mixing, energy supplied, type of equipment, e.g., blade type. In specific examples, mixing parameters take into account properties of the material being processed. In others, properties of the material are evaluated, then correlated to suitable mixing parameters. Establishing suitable mixing parameters can be based on routine experimentation, prior experience, and so forth.

To form the composition described herein, ingredients can be combined in any suitable manner and can involve a single step. In many cases, however, mixing is performed in a sequence of two or more steps, using equipment known in the art. In one example, aerogel particles and fibers are added to a solution containing processing aids such as defoamers, surfactants, dispersants, and/or emulsifiers.

The heat control article may take any form known to those of skill in the art. For example, an aerogel composition such as a fiber-containing blanket or pad can be made using techniques such as those described in, e.g., US9399864, US20210363699, WO2022024085, CN112759353, US11274044, CN112681009, CN113943171, CN110093783, CN112681009, JP2015048543, and/or US20200295328.

Generally, in a "wet laid" process, aerogel particles and optional materials are flocculated from an aqueous slurry to form a substantially stable homogeneous suspension of particles (floc). Preferably, the aqueous slurry includes less than 5% organic solvent, for example, less than 3% or less than 1% organic solvent by weight. The floc can separate from the aqueous based solvent, forming a two-phase system consisting of flocculated aerogel particles and a surnatant of substantially water. The floc may float on top of the surnatant, or a portion of the floc may be suspended in the surnatant. The flocculated material can support an even distribution of the different particles from which the blanket can be made. This stable, consistent distribution of particles can provide an aerogel blanket that exhibits a uniform composition throughout.

In one embodiment, such as described in US9399864, an aqueous slurry is prepared with the mixture of silica aerogel, hydrophobic silica-containing particles, ceramic fibers, and other components (e.g., binders, opacifiers, fire retardants, defoamers, etc.). Preferably, the relative amount of the various components in the aqueous slurry corresponds to their relative amounts in the aerogel composition. A charged compound or other emulsifier or dispersant is included in the slurry to create an emulsion, which is then coagulated with a flocculating agent. The resulting floc is collected on a scrim or belt and dewatered. The thickness of the aerogel composition may be adjusted by increasing or decreasing the solids loading of the aqueous slurry. In some embodiments, the solids loading may be from 5% to 25% of the aqueous slurry by weight, for example, from 5-10%, from 10 to 15%, from 15-20%, or from 20-25% by weight.

Without being bound by any particular theory, it is believed that as the flocculation becomes more efficient, the aerogel particles are able to pack more densely in the blanket. Flocculation agents preferably are able to flocculate sufficient solids in the mixture such that the bulk of the solids float to the top of the aqueous mixture, leaving the aqueous media relatively clear, rather than cloudy. Preferred flocculation agents are polymeric flocculation agents, in contrast to inorganic flocculation agents. Exemplary polymeric flocculation agents include quaternary polyamines such as polyamine, e.g., SuperFloc^{®} 577 or 581 flocculant from Kemira, and polyacrylamides such as Nalclear 7768, Nalclear 8187, and Nalclear 8176 polymers from Nalco, dicyandiamide resins, polydiallyldimethylammonium chloride (PDADMAC), amino silanes, quaternary amine-functionalized silanes, silicone resins, and mixtures or emulsions of any of these. In some embodiments the flocculation agent is in the form of a latex, or an aqueous emulsion of the flocculation agent. Flocculation agents may have a variety of number average molecular weights, e.g., from 400 to 60,000,000, preferably **from 400** to 1,000,000, for example, from 5000 to 10,000, from 10,000 to 100,000, from 100,000 to 500,000, from 500,000 to 1,000,000, from 20,000 to 10,000,000, from 1,000,000 to 30,000,000, or from 5,000,000 to 50,000,000.

Flocculation agents may be used in conjunction with a flocculation polymer. The flocculation agent is preferably an ionic polymer; the flocculation polymer is preferably an ionic polymer of the opposite charge. In some embodiments the flocculation polymer is in the form of a latex, or an aqueous emulsion of the flocculation polymer. The flocculation polymer may have a number average molecular weight of 400 to 1,000,000, for example, from 5000 to 10,000, from 10,000 to 500,000, from 20,000 to 50,000, or from 50,000 to 1,000,000. Alternatively, the flocculation polymer may have a molecular weight in the range described above for the flocculation agent. Suitable flocculation polymers include but are not limited to natural and synthetic latex polymers, acrylics, and polyacrylamides. As the flocculation agent is preferably a charged polymer, any of the agents listed above as a flocculation agent may also be employed as a flocculation polymer depending on the relative charge. Critically, only one component of a flocculation system (here termed the flocculation polymer) is added to the aqueous slurry before or while the other components (aerogel, fiber, opacifier, etc.) are added, while the flocculation agent is only added after all the other components are combined. Preferably, the flocculation agent and the flocculation polymer are used in amounts such that the amount of charge provided by the flocculation agent (i.e., the charge density times the mass) is within 20% of the amount of charge provided by the flocculation polymer, for example, within 10%, within 5%, or within 1%.

The total amount of flocculation agent and flocculation polymer together should be sufficient to bind the various components of the aerogel composition, but not so great that they fill the pores of the aerogel composition, thus degrading the thermal conductivity performance. Indeed, in certain embodiments, the flocculation agent and flocculation polymer may provide all the binding function required in the aerogel composition, obviating the use of a binder. Use of greater than the necessary amount of flocculation agent and flocculation polymer may also undesirably influence the mechanical performance of the composition, undesirably increase the density, increase caloric content of the aerogel composition, or degrade flammability performance. The total weight fraction of polymer, including dispersant, binder, defoamer, flocculation agent, and flocculation polymer, used to produce the aerogel composition may be less than 25%, for example, from 3 to 25%, e.g., from 4 wt% to 10 wt%, from 10 wt% to 15 wt%, from 15 wt% to 20 wt%, or from 20 wt% to 25 wt% based on the total weight of material added to the aqueous solvent, that is, the total weight of material in the floc and the surnatant but excluding the aqueous solvent. Where a binder is not used, the amount may be even smaller, e.g., from 3 wt% to 15 wt% or from 8 wt% to 17 wt% based on the total weight of material added to the aqueous solvent to form the aerogel composition. The same proportions of polymer may be found in the resulting aerogel composition. Likewise, the total weight of polymer, including dispersant, binder, defoamer, flocculation agent, and flocculation polymer, in the resulting aerogel composition may be less than 25%, for example, from 3 to 25%, e.g., from 4 wt% to 10 wt%, from 10 wt% to 15 wt%, from 15 wt% to 20 wt%, or from 20 wt% to 25 wt% based on the total weight of the aerogel composition. Where a binder is not used, the amount may be even smaller, e.g., from 3 wt% to 15 wt% or from 8 wt% to 17 wt% based on the total weight of the aerogel composition.

Threshold amounts of dispersant, defoamer, flocculation agent and flocculation polymer are required to form a cohesive aerogel composition using a wet laid method. One of skill in the art will recognize that the required amount will vary depending on the relative amounts of the non-polymer components (aerogel, fiber, opacifier, fire retardant, heat absorbing material, etc.). However, excess material can be detrimental to the thermal conductivity and/or flame retardance according to UL-94 and can undesirably increase the density. In certain embodiments, the total amount of flocculation system (i.e., flocculation agent and flocculation polymer) and binder used to produce the aerogel composition or heat control article is 3-20% by weight, for example, 4-16% by weight, based on the total weight of material in the floc and the surnatant but excluding the aqueous solvent. Likewise, the total amount of flocculation system and binder in the aerogel composition may be 3-20% by weight, for example, 4-16% by weight, based on the total weight of the aerogel composition.

In certain embodiments, the packing density of the various components may be increased by using compression to pressing additional water out of the floc prior to drying. For example, the floc may be passed through a two-roll press or pressed between two plates or platens. Alternatively, a single roller may be passed over the floc. Pressing increases the packing density of the various components by squeezing water from the floc. In the final product, this reduces interparticle porosity as the remaining water is replaced by air during drying. Alternatively or in addition, any of these methods may be used to compress the aerogel composition after it is dried. Following drying, compression may be used to make the composition thinner and denser, allowing the aerogel composition and/or heat control member to take up less space and also improving mechanical properties. The density of the aerogel composition or heat control member may be 0.1 to 0.6 g/cm³, for example, 0.15 to 0.5 g/cm³, 0.15 to 0.4 g/cm³, or 0.2 to 0.35 g/cm³.

In another embodiment, the fibers, aerogel, a binder, and any other desired components are charged into a mold and pressed into a pad, for example, as described in EP3835262. It may be necessary to heat or otherwise activate a polymeric binder in the mold. Alternatively or in addition, the fibers, aerogel, binder, and other components may be formulated into a paste and extruded, for example, as in EP3835262 and WO2020228998. Alternatively, the fibers, aerogel, and any other desired components are used to fill an envelope or other cavity using techniques such as those described in CN113785431, CN110544809, JP2012145204, and/or US20210332932. Alternatively or in addition, the mixture may be incorporated into or combined with a polymer foam, such as described in WO2020211320, JP2020019925, US10640629.

The heat control article (a blanket, for instance) comprising the aerogel composition may be fabricated in roughly planar or flat form for insertion between cells of a rechargeable battery, e.g., a lithium ion battery. In other approaches, the article can be prepared in another desired shape. For example, the heat control article may be shaped to be disposed about a particular component in a battery or other device and may have a more complicated shape.

In some embodiments, the aerogel composition is fabricated to the correct size or cut to the desired size of the heat control article. Alternatively or in addition, the heat control article includes an additional sheet-like material to enhance mechanical integrity, heat resistance, mechanical resilience, and/or other properties. Examples include but are not limited to silicone-based materials, polyvinylidene fluoride, chlorinated polyethylene, aramid materials such as Kevlar (e.g., woven mats of aramid fibers), and Kevlar nanofiber aerogels such as those described in Lyu, et al., ACS Nano 2019, 13, 2236-2245. Woven mats of Kevlar or other aramid fibers may be impregnated with a shear thickening fluid such as those described in US 7,825,045.

An envelope can be used in some cases, serving to prevent dusting, help maintain the shape of the heat control article, facilitate its manipulation or installation, and so forth. The material that forms the envelope is preferably a flame retardant and/or heat resistant polymeric material, including, for instance, silicones, polyvinylidene fluoride (PVDF), polyethylene terephthalate (PET), chlorinated polyethylene, and other similar polymers known to those of skill in the art. Alternatively, or in addition, the material for the envelope may include a reinforcing fiber such as an aramid fiber to provide puncture resistance. A reinforcing material may be used in combination with other polymers or the envelope may be formed entirely of such polymers, e.g., a woven cloth of aramid fiber. In one embodiment, the envelope may comprise one or two sheets of polymer film, e.g., PET film, disposed about the two planar sides of the aerogel composition. In some embodiments, a frame, e.g., of silicone rubber, may be disposed about the edges of the aerogel composition and envelope to seal the envelope and ease handling of the resulting heat control article.

Alternatively or in addition, the heat control article may include several layers of the aerogel composition stacked on top of one another. Optionally, the layers may be separated by any of the materials that are described above in connection with the envelope. Alternatively or in addition, the layers may be separated by foam pads or mica sheets to further improve insulation performance. Alternatively or in addition, such layers may be used on the outside of the aerogel composition laminate. In some embodiments, it may be desirable to include a heat conducting material that is configured to transport heat in a controlled fashion, for example, to a heat sink. The various layers may be attached to one another by any appropriate adhesive known to those of skill in the art, needled, or encapsulated by an envelope to maintain the laminate structure.

Alternatively or in addition, the heat control article may include a coating. For example, a polymer or prepolymer solution or emulsion may be sprayed, painted, cast, or otherwise coated on one or more outside surfaces of the aerogel composition or laminate and cured. Suitable cured polymers include polyolefins, silicones, polyvinyl alcohol, starches, polytetrafluoroethylene, phenolics, melamines, phenol formaldehyde, acrylic polymers and other polymers known to those of skill in the art. Such a coating can provide functionality similar to the envelope discussed above but with less material. Alternatively or in addition, the aerogel composition may be surface treated, for example, it may be hydrophobized. The aerogel composition may be contacted with a hydrophobizing agent such as a silane compound, a silazane compound, or a disiloxane compound. Examples of silane compounds include alkylhalosilanes having the formula R^{'}ₓSiX₄₋ₓ and alkoxysilanes having the formula R^{'}ₓSi(OR^{"})₄₋ₓ wherein R' is selected from the group consisting of C₁-C₁₀ branched and straight chain alkyl or alkenyl, C₃-C₁₀ cycloalkyl, and C₆-C₁₀ aryl, R" is C₁-C₅ branched or straight chain alkyl, X is a halogen, preferably chlorine, and x is an integer of 1-3. The aerogel composition may be immersed in the hydrophobizing agent directly or exposed to a vapor of the hydrophobizing agent. Alternatively, the aerogel composition may be immersed in a mixture of the hydrophobizing agent and an appropriate solvent. The temperature and pH of the treatment media may be adjusted as known to those of skill in the art to manipulate the degree of treatment. Exemplary treatment agents include but are not limited to trimethylchlorosilane, dimethyldichlorosilane, hexamethyldisilazane, hexamethyldisiloxane, and other hydrophobizing agents known to those of skill in the art. Hydrophobizing agents are preferably water-soluble and/or have a boiling point less than 200 °C, less than 150 °C, or preferably less than 100 °C.

The aerogel composition and/or heat control article have a thickness of 0.3 to 6 mm, for example, from 0.3 to 5 mm, from 0.4 to 4 mm, from 1 to 3 mm, or from 1.5 to 2.5 mm. In some embodiments, at least a portion of the components are compressed after drying of the aerogel composition, e.g., during assembly of the heat control article, for example, between rollers or platens, to reduce the final thickness of the product article.

The aerogel composition and/or heat control article can exhibit excellent thermal stability. For example, the heat control article may shrink less than 2% after aging at 650 °C according to ASTM-C356. The aerogel composition and/or heat control article may have a thermal conductivity at 25 °C of less than than 30 mW/m·K, more preferably less than 25 mW/m·K, for example, from 5 mW/m·K to 25 mW/m·K or from 8 mW/m·K to 15 mW/m·K, or from 17 mW/ m·K to 30 mW/ m·K, or from 15 mW/m·K to 25 mW/m·K or from 20 mW/m.K to 30 mW/m.K according to test method ASTM C518.

The aerogel composition and/or heat control article may have a tensile strength of 0.1 to 5 MPa, for example, 0.1 to 3 MPa or 0.15 to 2 MPa.

The aerogel composition and/or heat control article can be flexible, a property that may be measured according to ASTM C1101 or another suitable technique. Manual bending tests can be useful, especially at the initial screening stages of a product.

The aerogel composition and/or heat control article has a flammability rating of non-flammable according to UL94-V0.

Alternatively or in addition, the aerogel composition and/or heat control article may be compressible. For example, it may have a compression modulus at 50% compression of 0.1 to 100 MPa, as measured by ASTM C 165-05, for example 0.1-1 MPa, 1-10 MPa, 5-30 MPa, 10-50 MPa, or 30 to 100 MPa.

The invention is further illustrated in the following non-limiting exemplification section.

### EXEMPLIFICATON

### Examples 1-8 and Comparative Examples 1 and 2

Non-woven blankets containing aerogel particles (except for Comparative Example 1) and a combination of different particles (Table 1) were produced in a wet laid process as described below. Dispersant (Barlox 12 (30 wt% laurel dimethyl amine oxide in dispersion), or Jeffamine M2070, indicated as B or J in Table 1 below), Nalclear 7768 polymer (Nalco), and Foamkill^{™} 830F defoamer (Crucible Chemical) were dispersed in water to form white (process) water in a WARING benchtop heavy duty blender, according to the formulations in Table 1 and mixed for 10 sec at high shear to form process water. Fiberfrax^{®} 7001 C5 ceramic fiber (Unifrax), ¼" E-06 chopped glass fiber (Lauscha Fiber International), P200 aerogel particles (Cabot Corporation) (Examples 1-7) or a mixture of P200 aerogel (84%) and silicon carbide (16%) (Comparative Example 2), 44 micron rutile titania sand (Loudwolf), F600 silicon carbide (Sturbridge Metallurgical Services), and aluminum trihydroxide (ATH, Sigma Aldrich), were added to a WARING heavy duty blender in the quantities listed in Table 1. The mixture in the blender was mixed for 20 sec at high shear (2000 rpm) to form a solid dispersion. Novacryl PSR 300 and Dow HV 496 resins were added to the blender and mixed for another 20 sec at high shear to make a slurry, which was then transferred to 5L beaker. To destabilize the slurry system, either Superfloc 577 flocculant (50% polymer in dispersion, Kemira) or polydiallyldimethylammonium chloride (PDADMAC, 60-80 cps viscosity, 20wt% polymer in dispersion) from Sigma Aldrich,was added to the slurry to produce flocs. Typically, 2-3 gram flocculant was added to the dispersion until a dense flocculant layer formed at the top. After flocculation, the slurry was drained through a single layer wet-lay forming wire. The flocs were retained by the forming wire and were evenly distributed across it. The forming wire was then passed over vacuum to remove additional water from the aerogel floc. As indicated in Table 1, certain samples were passed through a roll press to squeeze out some of the water and pack the various components more compactly. All blankets were removed from the forming wire and placed in a drying oven at 120° C for about 20min.

Example 8 was produced in a wet laid process as follows: One liter of water was mixed with dispersant, Nalclear 7768 polymer (30 wt% polymer emulsion, Nalco), Foamkill^{™} 830F defoamer in the amounts indicated in Table 1 in a WARING benchtop heavy duty blender and mixed for 10 sec at high shear. This water was combined with 12L water in a 5 gallon bucket to form process water. One liter of the process water was scooped back into the WARING blender along with P200 aerogel, Fiberfrax^{®} 7001 C5 ceramic fiber, 44 micron rutile titania sand, F600 silicon carbide, and aluminum trihydroxide as indicated in Table 1. The mixture in the blender was mixed for 20 sec at high shear to form a solid dispersion. Novacryl PSR 300 and Dow HV 496 resins were added to the blender as indicated in Table 1 and mixed for another 20 sec at high shear to make a slurry, which was then transferred to the 5 gallon bucket. The slurry in the bucket was mixed with a paddle until uniform, then PDADMAC was added dropwise in the amount indicated in Table 1 under constant mixing to floc the system. The slurry was then poured into a 12x12 headbox with a forming wire suspended over a full 20L well. The material was mixed in the headbox to re-distribute the flocs evenly, and flocs were allowed to float to the surface to confirm evenness of the layer before the valve was opened, dropping all water from the headbox and retaining the flocs on the forming wire. The forming wire was then passed over vacuum to remove additional water from the aerogel floc. The sample was rolled to press out some of the water and pack the various components more compactly, then it was removed from the forming wire and dried at 170°C for about 20 min.

Sample thickness was measured with a thickness gauge. Thermal conductivity was measured at room temperature and at 140 °C using a LaserComp Heat Flow Meter instrument according to ASTM C518; standard deviations represent the standard deviation from the average of two readings during a measurement. The blanket of Comparative Example 1 was too thin for the thermal conductivity measurement, so a polycarbonate (PC) pad was used to support the material during testing. The thermal conductivity (TC) was calculated by measuring the following data: The TC for the 11.55mm thick PC pad alone was 196.69mW/m.K. The TC for the 12.62mm thick PC pad and ceramic sample was 156.67 mW/m.K. The TC of the ceramic sample (1.11 mm thick) was calculated using the equation: 1.11/TCceramic + 11.55/TC_{PC} = 12.62/TC(ceramic+PC). Compression modulus was measured according to ASTM C165 with three replicates. Flammability was measured according to the UL94 standard. Tensile strength (maximum load) was measured according to ASTM D5035 with three replicates. The total amount of polymeric species in Examples 1-3 was 12 wt% and 21 wt% for Examples 4-7. The total amount of polymeric species in Example 8 was 17%. The total amount of polymeric species in Comparative Example 2 was 26 wt%. Excluding dispersant and defoamer, the total amount of polymeric species in Examples 1-3 and 8 was 7 wt% and 12 wt% in Examples 4-7. Excluding dispersant and defoamer, the total amount of polymeric species in Comparative Example 2 was 22%.

**Table 1. Wet laid nonwoven blanket containing aerogel particles**

| | Comparative 1 | Example 1 | Example 2 | Example 3 | Example 4 |
|---|---|---|---|---|---|
| White water (ml) | 2000 | 2000 | 2000 | 2000 | 2000 |
| Dispersant type | B | B | B | B | J |
| Dispersant amount (gram) | 2.2 | 2.2 | 2.2 | 2.2 | 2.2 |
| P200 Aerogel (gram) | 0 | 11.92 | 11.92 | 11.92 | 11.92 |
| Ceramic fiber (gram) | 19.07 | 7.15 | 7.15 | 7.15 | 7.15 |
| Glass fiber (gram) | 0.55 | 0.55 | 0 | 0 | 0 |
| Rutile sand (gram) | 1.73 | 1.73 | 1.73 | 1.73 | 1.73 |
| SiC (gram) | 1.73 | 1.73 | 1.73 | 1.73 | 1.73 |
| ATH (gram) | 0.55 | 0 | 0.55 | 0.55 | 0.55 |
| Foamkill 830F (grams) | 2.2 | 2.2 | 2.2 | 2.2 | 2.43 |
| Nalclear Polymer | 2.48 | 2.48 | 2.48 | 2.48 | 2.48 |
| Novacryl PSR 300 resin (g) | 0.31 | 0.22 | 0.31 | 0.31 | 0.31 |
| HV 496 resin (g) | 0.97 | 0.97 | 0.97 | 1.21 | 0.97 |
| Flocculant type | PDADMAC | PDADMAC | PDADMAC | PDADMAC | PDADMAC |
| Flocculant amount (grams) | 2.36 | 2.50 | 2.35 | 2.64 | 2.75 |
| Compression | N | N | Y | Y | N |
| Thickness (mm) | 1.1 | 3.5 | 2.8 | 2.2 | 2.8 |
| Thermal Conductivity, RT, (mW/m.K) | 50.8 | 25.2 ± 0.4 | 22.6 ± 0.3 | 23.1 ± 0.1 | 24.6 ± 0.1 |
| Compression modulus, (MPa) ASTM C165 | | 0.41 (50% compression) | 0.62 (50% compression) | | |
| Tensile Strength (Max Load) MPa | 1.1 | 0.1 | | | 0.09 |
| UL94 Flammability | | V0 | V0 | | |

| | Example 5 | Example 6 | Example 7 | Comparative 2 | Example 8 |
|---|---|---|---|---|---|
| White water (ml) | 2000 | 2000 | 2000 | 2000 | 1300 |
| Dispersant type | J | J | J | B | J |
| Dispersant amount (gram) | 2.2 | 2.2 | 2.2 | 2.0 | 4.12 |
| Aerogel (gram) | 11.92 | 9.53 | 9.53 | 12.9* | 22.31 |
| Ceramic fiber (gram) | 7.15 | 9.53 | 9.53 | 6.5 | 13.38 |
| Glass fiber (gram) | 0 | 0 | 0 | 0.50 | 0 |
| Rutile sand (gram) | 1.73 | 1.73 | 1.73 | 0 | 3.23 |
| SiC (gram) | 1.73 | 1.73 | 1.73 | 0 | 3.23 |
| ATH (gram) | 0.55 | 0.55 | 0.55 | 0 | 1.03 |
| Foamkill 830F (grams) | 2.20 | 2.4 | 2.2 | 2.0 | 4.44 |
| Nalclear Polymer | 2.48 | 2.48 | 2.48 | 2.25 | 4.64 |
| Novacryl PSR 300 (grams) | 0.31 | 0.31 | 0.31 | 1.95 | 0.58 |
| HV 496 resin (grams) | 0.97 | 0.97 | 0.97 | 8.78 | 1.81 |
| Flocculant type | PDADMAC | PDADMAC | PDADMAC | SuperFloc 577 | PDADMAC |
| Flocculant amount (grams) | 2.61 | 2.60 | 2.45 | 1.06 | 4.62 |
| Compression | Y | N | Y | N | Y |
| Thickness (mm) | 1.6 | 2.4 | 1.5 | 2.9 | 2.7 |
| Thermal Conductivity, RT, (mW/m.K) | 20.3 ± 0.3 | 25.0 ± 0.1 | 21.8 ± 0.3 | 29.5 ± 0.1 | 22.2 ± 0.3 |
| Thermal Conductivity, 140°C | 25.5 ± 0.3 | | | | |
| Tensile Strength (max load) MPa | 0.1 | 0.2 | 0.2 | | |
| UL94 Flammability | V0 | | V0 | Full flame burn to top | |

| | | | | | |
|---|---|---|---|---|---|
| *Mixture of 84% P200 aerogel (Cabot Corporation) and 16% silicon carbide. | | | | | |

### Example 9

Experiments were conducted to evaluate the properties and/or performance of several non-woven blankets. Example 9-1 with only one type of fiber (Fiberfrax^{®} 7001 C5 ceramic fiber) was prepared from the ingredients listed in Table 2. For Examples 9-2 through 9-7, the composition further included an additional (secondary) fibrous ingredient. Example 9-3, for example, employed chopped glass fibers (6 mm E-glass chopped fibers with a diameter of 6 µm, from Lauscha Fiber International), while the secondary fiber in Example 9-5 was Belcotex^{®} 100 silica gel fiber (Textile Technologies Europe Ltd.).

Other blankets were prepared according to embodiments described herein. Specifically, Examples 9-2 and 9-7 employed PBI fibers (0.25 inches long (6.35 mm), about 1.1 micron diameter, from PBI Performance Products, Inc.) at, respectively, a relatively low and a relatively high loading. Aramid fibers (12 mm aramid fibers, 12 micron diameter from Endnus New Material (Donguan) Co., Ltd) were employed in Example 9-3 and ceramic wool (Ceramic fiber bulk, high purity 2300°F) from Ceramaterials LLC) in Example 9-6. The materials and amounts employed to prepare the blankets are shown in Table 2 below.

**Table 2**

| | 9-1 | 9-2 | 9-3 | 9-4 | 9-5 | 9-6 | 9-7 |
|---|---|---|---|---|---|---|---|
| Component | Amount (g) | | | | | | |
| P200 Aerogel | 16.07 | 16.07 | 16.07 | 16.07 | 16.07 | 16.07 | 16.06 |
| Ceramic Fibers | 9.64 | 9.64 | 9.64 | 9.64 | 9.64 | 9.64 | 8.03 |
| PBI fiber | 0 | 1.93 | 0 | 0 | 0 | 0 | 8.03 |
| Chopped glass | 0 | 0 | 1.93 | 0 | 0 | 0 | 0 |
| Aramid fiber | 0 | 0 | 0 | 1.93 | 0 | 0 | 0 |
| Silica gel fibers | 0 | 0 | 0 | 0 | 1.93 | 0 | 0 |
| Ceramic wool | 0 | 0 | 0 | 0 | 0 | 1.93 | 0 |
| Rutile Sand | 2.33 | 2.33 | 2.33 | 2.33 | 2.33 | 2.33 | 2.91 |
| Silicon Carbide | 2.33 | 2.33 | 2.33 | 2.33 | 2.33 | 2.33 | 2.91 |
| Aluminum Trihvdroxide | 0.74 | 0.74 | 0.74 | 0.74 | 0.74 | 0.74 | 0.93 |
| Surfactant | 2.97 | 2.97 | 2.97 | 2.97 | 2.97 | 2.97 | 3.71 |
| Nalclear polymer | 3.34 | 3.34 | 3.34 | 3.34 | 3.34 | 3.34 | 4.18 |
| Defoamer | 2.97 | 2.97 | 2.97 | 2.97 | 2.97 | 2.97 | 3.71 |
| Acrylic Binder | 0.42 | 0.42 | 0.42 | 0.42 | 0.42 | 0.42 | 0.52 |
| Silicone Binder | 8.14 | 8.14 | 8.14 | 8.14 | 8.14 | 8.14 | 8.14 |
| Flocculant | 4.87 | 4.85 | 4.9 | 5.01 | 4.89 | 4.89 | 5.05 |

The blankets were produced in a wet laid process according to the following procedure.

Dispersant (Jeffamine M2070, Huntsman), Nalclear 71605 polymer (Nalco), and Foamkill^{™} 830 defoamer (Crucible Chemical) were dispersed in water to form a one (1) Liter white (process) aqueous concentrate in a WARING benchtop heavy duty blender, according to the formulations in Table 2. Mixing was conducted for 10 sec at high shear to form process water. The concentrate was then diluted in approximate 10 Liters of water in a 5 gallon tank. After mixing, approximately 2 Liters of the diluted process water was transferred to the Waring blender. Ceramic fiber (Fiberfrax^{®} 7001 C5 ceramic fiber, Unifrax, a high purity coarsely chopped product having an average fiber diameter of 1.5 to 2.5 microns, and a fiber index of 45-55% measured by conical elutriation), a secondary fibrous material (for Examples 9-2 through 9-7), P200 aerogel particles (Cabot Corporation), 44 micron rutile titania sand (Loudwolf), F600 silicon carbide (Sturbridge Metallurgical Services), and aluminum trihydroxide (ATH, Sigma Aldrich), were added to the WARING heavy duty blender in the quantities listed in Table 1. The mixture in the blender was mixed for 20 sec at high shear (15000 rpm) to form a paste-like dispersion. Acrylic binder (Novacryl PSR 300, 60wt% polymer in dispersion, Synthomer) and silicone binder (Dowsil HV 496 resin, Dow) were added to the blender and mixed for another 20 sec at high shear to make a slurry, which was added to the remaining process water in the 5 gallon tank. A small amount (up to 0.4-0.5 g) of Foamkill^{™} 830 defoamer, in addition to the amounts indicated in the table below, was stirred into the system to account for additional foam generation. To destabilize the slurry system, a flocculant (polydiallyldimethylammonium chloride (PDADMAC), 60-80 cps viscosity, 20wt% polymer in dispersion from Sigma Aldrich) was added to the slurry to produce flocs. Typically, an amount of 4 to 5 grams flocculant (as indicated in Table 2) was added to the dispersion until a dense flocculant layer formed at the top. The total amount of polymer with respect to the particulate and polymer components was 21-22%

After flocculation, the slurry was drained through a single layer wet-lay forming wire to produce a 30cm x 30cm blanket sheet. The blanket and forming wire were then passed over vacuum to remove additional water from the aerogel floc. Samples were passed through a roll press to squeeze out some of the water and compress the various components into a more compact form. All blankets were removed from the forming wire and placed in a drying oven at 120° C for about 20min. After drying, the blankets were calendared by a two-roll mill to form a thin blanket.

The blankets were evaluated for several properties. Thermal conductivity was measured using a LaserComp Heat Flow Meter instrument according to ASTM C518. Where samples were too thin to be measured, they were supported on a shim and the thermal conductivity of the resulting structure (shim + blanket). The thermal conductivity of the structure was compared to the thermal conductivity measured for the shim alone, to arrive at the thermal conductivity of the blanket itself.

Initial flexibility evaluations were performed by hand bending, while tensile strength (maximum load) was measured according to ASTM D5035.

Results are shown in Table 3:

**Table 3**

| Run | Blanket Thickness (mm) | TC, RT, mW/m·K | Tensile strength (MPa) | Flexibility |
|---|---|---|---|---|
| 9-1(no secondary fibers) | 1.05 | 22.79 | 0.1 | No |
| 9-2 (PBI low loading) | 1.15 | 24.90 | 0.5 | Yes |
| 9-3 (chopped glass) | 0.98 | 23.86 | 0.3 | No |
| 9-4 (aramid) | 1.02 | 24.12 | 0.2 | Yes |
| 9-5 (silica gel fibers) | 0.98 | 23.08 | 0.2 | No |
| 9-6 (ceramic wool) | 0.94 | 23.61 | 0.4 | No |
| 9-7 (PBI high loading) | 2.1 | 25.64 | 0.5 | Yes |

As seen in Table 2, PBI secondary fibers appeared to contribute to the tensile strength of the blanket, a larger effect being observed at the higher loading.

The ceramic wool blanket displayed a tensile strength comparable to that of the blanket with no secondary fibers; its thermal conductivity, however, compared very well to the thermal conductivity of Blanket 1.

While Blanket 1 was not found to be flexible (under a hand bending test), the polymer fibrous component appeared to add flexibility to the blanket product.

All the blankets had acceptable thermal conductivities and had a V0 rating using the UL94 flammability test.

### Example 10

Experiments were conducted to evaluate the properties and/or performance of several non-woven blankets. Ceramic fiber (Fiberfrax^{®} 7001 C5 ceramic fiber) was used in combination with 6mm chopped E glass (Yiquedok) (Examples 10-1, 10-2), 12 mm glass fiber (Vetrotex EC-6-12-SP fiber from Saint-Gobain, Examples 10-3, 10-4), or glass microfiber (Microfiber B-06-F from Lauscha Fiber International, 0.65 micron diameter, Example 10-5) in the amounts listed in Table 4.

The blankets were produced in a wet laid process according to the following procedure.

Dispersant (Jeffamine M2070, Huntsman), Nalclear 71605 polymer (25% polymer in dispersion, Nalco) and Foamkill^{™} 830 defoamer (30% polymer in dispersion, Crucible Chemical) were dispersed in water to form a one (1) Liter white (process) aqueous concentrate in a WARING benchtop heavy duty blender, according to the formulations in Table 4. Mixing was conducted for 10 sec at high shear to form process water. The concentrate was then diluted to approximate 3 Liters of water. After mixing, approximately 1.5 Liters of the diluted process water was transferred to the Waring blender. For Examples 10-1, 10-4, and 10-5, the glass fiber, ENTERA EV5200 aerogel particles (0.1-1.2 mm diameter, Cabot Corporation) 44 micron rutile titania sand (Loudwolf), F600 silicon carbide (Sturbridge Metallurgical Services), and aluminum trihydroxide (ATH, ThermoFisher Scientific), were added to the WARING heavy duty blender in the quantities listed in Table 4. The mixture in the blender was mixed for 40 sec at high shear (15000 rpm). For Examples 10-2 and 10-3, the glass fibers were added and mixed for 40 s, followed by the aerogel, titania, and ATH, with the particulates blended for a further 40 s. For all examples, ceramic fiber, polyurethane binder (Joncryl FLX 5201 polyurethane from BASF, 30% polymer in dispersion) and silicone binder (Dowsil HV 496 resin, 40% polymer in dispersion, Dow) were added to the blender and mixed for another 20 sec at high shear to make a slurry, which was added to the remaining process water. To destabilize the slurry system, 2.25-2.75 g of a flocculant (polydiallyldimethylammonium chloride (PDADMAC), 60-80 cps viscosity, 20wt% polymer in dispersion from Sigma Aldrich) was added to the slurry to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity as described above; all samples had a thermal conductivity at 25 °C of 23-25 mW/m.K. After drying, the blankets were pressed between two platens to form a thin blanket 1-1.2 mm thick and then evaluated for tensile strength as described above. The total polymer loading was about 21 wt% of the total solids in the slurry and 11 wt% excluding dispersant and defoamer. The density for all blankets after compression was from 0.28 to 0.32 g/cm³. The resulting aerogel compositions were expected to fulfill the criteria for UL94-V0 rating.

**Table 4**

| **Component (all in grams)** | **10-1** | **10-2** | **10-3** | **10-4** | **10-5** |
|---|---|---|---|---|---|
| **Aerogel** | 9.54 | 9.54 | 9.54 | 9.54 | 9.54 |
| **Ceramic fibers** | 4.57 | 5.71 | 5.71 | 5.71 | 5.71 |
| **Glass fibers** | 2.28 | 1.14 | 1.14 | 1.14 | 1.14 |
| **Rutile sand** | 1.38 | 1.38 | 1.38 | 1.38 | 1.38 |
| **Silicon Carbide** | 1.38 | 1.38 | 1.38 | 1.38 | 1.38 |
| **ATH** | 0.44 | 0.44 | 0.44 | 0.44 | 0.44 |
| **Surfactant** | 1.76 | 1.76 | 1.76 | 1.76 | 1.76 |
| **Nalclear polymer** | 1.984 | 1.984 | 1.984 | 1.984 | 1.984 |
| **Foamkill** | 1.76 | 1.76 | 1.76 | 1.76 | 1.76 |
| **PU binder** | 0.50 | 0.50 | 0.50 | 0.50 | 0.50 |
| **Silicone binder** | 3.86 | 3.86 | 3.86 | 3.86 | 3.86 |
| **Tensile Strength (MPa)** | 0.4 | 0.4 | 0.7 | 0.7 | 0.5 |

### Example 11

Experiments were conducted to evaluate the properties and/or performance of several non-woven blankets. Ceramic fiber (Fiberfrax^{®} 7001 C5 ceramic fiber) was used in combination with 6 mm chopped E glass (6 micron diameter, Valmiera Glass) in the amounts listed in Table 5.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form a one (1) Liter white (process) aqueous concentrate in a WARING benchtop heavy duty blender, according to the formulations in Table 5. Mixing was conducted for 10 sec at high shear to form process water. The concentrate was then diluted to approximate 3 Liters of water. After mixing, approximately 1.5 Liters of the diluted process water was transferred to the Waring blender. The glass fiber, ENTERA EV5200 aerogel particles (Cabot Corporation), 1-1.5 micron (D50) rutile titania (Fisher Scientific), F600 silicon carbide (Sturbridge Metallurgical Services), and aluminum trihydroxide (ATH, Thermo Fisher Scientific), were added to the WARING heavy duty blender in the quantities listed in Table 5. The mixture in the blender was mixed for 40 sec at high shear (15000 rpm) for Examples 11-1 and 11-2 and 80 s for Example 11-3. For all examples, ceramic fiber, polyurethane binder (Joncryl FLX 5201 polyurethane from BASF) and silicone binder (Dowsil HV 496 resin, Dow) were added to the blender and mixed for another 20 sec at high shear to make a slurry, which was added to the remaining process water. To destabilize the slurry system, a flocculant (polydiallyldimethylammonium chloride (PDADMAC), 60-80 cps viscosity, 20wt% solids from Sigma Aldrich) was added to the slurry in the quantities indicated in Table 5 to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity as described above. After drying, the blankets were pressed between two platens to form a thin blanket 1-1.2 mm thick and then evaluated for tensile strength as described above. The total polymer loading was 21-22 wt% of the total solids in the slurry and 11-12 wt% excluding dispersant and defoamer. The resulting aerogel compositions were expected to fulfill the criteria for UL94-V0 rating.

**Table 5**

| **Component (all in grams)** | **11-1** | **11-2** | **11-3** |
|---|---|---|---|
| **Aerogel** | 9.54 | 9.54 | 9.54 |
| **Ceramic fibers** | 5.71 | 0 | 0 |
| **Glass fibers** | 1.14 | 4.77 | 4.77 |
| **Rutile sand** | 2.07 | 1.38 | 1.38 |
| **Silicon Carbide** | 0 | 1.38 | 1.38 |
| **ATH** | 0.44 | 0.44 | 0.44 |
| **Surfactant** | 1.76 | 1.76 | 1.76 |
| **Nalclear polymer** | 1.94 | 1.94 | 1.94 |
| **Foamkill** | 1.76 | 1.76 | 1.76 |
| **PU binder** | 0.50 | 0.50 | 0.50 |
| **Silicone binder** | 3.86 | 3.86 | 3.86 |
| **Flocculant** | 2.32 | 2.29 | 2.11 |
| **Thermal Conductivity at 25 °C (mW/m.K)** | 24.1 | 23.8 | 23.2 |
| **Tensile Strength (MPa)** | 0.7 | 1.1 | 0.7 |

### Example 12

Experiments were conducted to evaluate the properties and/or performance of several non-woven blankets. Ceramic fiber (Fiberfrax^{®} 7001 C5 ceramic fiber) was used in combination with 12 mm glass fiber (Vetrotex EC-6-12-SP glass fiber from Saint Gobain) in the amounts listed in Table 6.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form a one (1) Liter white (process) aqueous concentrate in a WARING benchtop heavy duty blender, according to the formulations in Table 6. Mixing was conducted for 10 sec at high shear to form process water. The concentrate was then diluted to approximate 3 Liters of water. After mixing, approximately 1.5 Liters of the diluted process water was transferred to the Waring blender. The glass fiber was added to the WARING heavy duty blender in the quantities listed in Table 6. The mixture in the blender was mixed for 40 sec at high shear (15000 rpm) for Examples 12-1 and 12-2 and 60 s for Example 12-3. For all examples, ENTERA EV5200 aerogel particles (Cabot Corporation), 44 micron rutile titania sand (Loudwolf), F600 silicon carbide (Sturbridge Metallurgical Services), and aluminum trihydroxide (ATH, Thermo Fisher Scientific) were added to the WARING heavy duty blender in the quantities listed in Table 6 and the mixture blended for 40 s at high shear. Ceramic fiber, polyurethane binder (Joncryl FLX 5201 polyurethane from BASF) and silicone binder (Dowsil HV 496 resin, Dow) were added to the blender and mixed for another 20 sec at high shear to make a slurry, which was added to the remaining process water. To destabilize the slurry system, a flocculant (polydiallyldimethylammonium chloride (PDADMAC), 60-80 cps viscosity, 20wt% solids from Sigma Aldrich) was added to the slurry in the quantities indicated in Table 6 to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity as described above; all samples had a thermal conductivity at 25 °C of 23-25 mW/m.K. After drying, the blankets were pressed between two platens to form a thin blanket 1-1.2 mm thick and then evaluated for tensile strength as described above. The total polymer loading was about 21 wt% of the total solids in the slurry and 11 wt% excluding dispersant and defoamer. The density for all blankets after compression was 0.31-0.32 g/cm³. The resulting aerogel compositions were expected to fulfill the criteria for UL94-V0 rating.

**Table 6**

| **Component (all in grams)** | **12-1** | **12-2** | **12-3** |
|---|---|---|---|
| **Aerogel** | 9.54 | 9.54 | 9.54 |
| **Ceramic fibers** | 5.71 | 5.71 | 5.14 |
| **Glass fibers** | 1.14 | 1.14 | 1.71 |
| **Rutile sand** | 1.38 | 1.38 | 1.38 |
| **Silicon Carbide** | 1.38 | 1.38 | 1.38 |
| **ATH** | 0.44 | 0.44 | 0.44 |
| **Surfactant** | 1.76 | 1.76 | 1.76 |
| **Nalclear polymer** | 1.94 | 1.94 | 1.94 |
| **Foamkill** | 1.76 | 1.76 | 1.76 |
| **PU binder** | 0.50 | 0.50 | 0.50 |
| **Silicone binder** | 3.86 | 3.86 | 3.86 |
| **Flocculant** | 2.55 | 2.56 | 2.62 |
| **Tensile Strength (MPa)** | 1.0 | 0.9 | 0.9 |

### Example 13

Experiments were conducted to evaluate the properties and/or performance of several non-woven blankets. Ceramic fiber (Fiberfrax^{®} 7001 C5 ceramic fiber) was used in combination with 12 mm glass fiber (Vetrotex EC-6-12-SP glass fiber from Saint Gobain) and aramid fiber (12 mm aramid fibers, 12 micron diameter from Endnus New Material (Donguan) Co., Ltd) in the amounts listed in Table 7.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form a one (1) Liter white (process) aqueous concentrate in a WARING benchtop heavy duty blender, according to the formulations in Table 6. Mixing was conducted for 10 sec at high shear to form process water. The concentrate was then diluted to approximate 3 Liters of water. After mixing, approximately 1.5 Liters of the diluted process water was transferred to the Waring blender. The glass fiber was added to the WARING heavy duty blender in the quantities listed in Table 7. The mixture in the blender was mixed for 40 sec at high shear (15000 rpm). ENTERA EV5200 aerogel particles (Cabot Corporation), 44 micron rutile titania sand (Loudwolf), F600 silicon carbide (Sturbridge Metallurgical Services), aluminum trihydroxide (ATH, Thermo Fisher Scientific), and aramid fibers were added to the WARING heavy duty blender in the quantities listed in Table 7 and the mixture blended for 40 s at high shear. Ceramic fiber, polyurethane binder (Joncryl FLX 5201 polyurethane from BASF) and silicone binder (Dowsil HV 496 resin, Dow) were added to the blender and mixed for another 20 sec at high shear to make a slurry, which was added to the remaining process water. To destabilize the slurry system, a flocculant (polydiallyldimethylammonium chloride (PDADMAC), 60-80 cps viscosity, 20wt% solids from Sigma Aldrich) was added to the slurry in the quantities indicated in Table 7 to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity and tensile strength as described above. The total polymer loading was about 14 wt% of the total solids in the slurry and 4% excluding dispersant and defoamer. The density of Example 13-1 was 0.22 g/cm³. The resulting aerogel compositions were expected to fulfill the criteria for UL94-V0 rating.

**Table 7**

| **Component (all in grams)** | **13-1** | **13-2** |
|---|---|---|
| **Aerogel** | 11.92 | 11.92 |
| **Ceramic fibers** | 6.43 | 7.14 |
| **Glass fibers** | 1.43 | 1.43 |
| **Aramid fibers** | 0.71 | 0 |
| **Rutile sand** | 1.73 | 1.73 |
| **Silicon Carbide** | 1.73 | 1.73 |
| **ATH** | 0.55 | 0.55 |
| **Surfactant** | 2.2 | 2.2 |
| **Nalclear polymer** | 2.48 | 2.48 |
| **Foamkill** | 2.2 | 2.2 |
| **PU binder** | 0 | 0 |
| **Silicone binder** | 0 | 0 |
| **Flocculant** | 2.84 | 2.98 |
| **Tensile Strength (MPa)** | 1.6 | 1.4 |
| **Thermal Conductivity at 25 °C mW/m.K** | Between 22 and 25 | 22.0 |

### Example 14

Experiments were conducted to evaluate the properties and/or performance of several non-woven blankets. Ceramic fiber (Fiberfrax^{®} 7001 C5 ceramic fiber) was used in combination with one or more of 3 mm chopped E glass (Vetrotex EC-6-3-SP glass fiber from Saint Gobain) (Examples 14-1, 14-2), 6 mm chopped E glass (6 micron diameter, Valmiera Glass, Example 14-4), 6 mm E-glass chopped fibers with a diameter of 6 µm, from Lauscha Fiber International, silica gel fiber (6mm long, 8 micron diameter, Belcotex; Example 14-3), milled glass fiber (1/32" (0.79mm), Fiber Glast), 3 mm aramid fiber (Donguang Sovetl Special Rope and Webbing Co.), and aramid pulp (Donguang Sovetl Special Rope and Webbing Co.) in the amounts listed in Table 8.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form a one (1) Liter white (process) aqueous concentrate in a WARING benchtop heavy duty blender, according to the formulations in Table 8. Mixing was conducted for 10 sec at high shear to form process water. The concentrate was then diluted to approximate 3 Liters of water. After mixing, approximately 1.5 Liters of the diluted process water was transferred to the Waring blender. The mixing sequence for the remaining components is listed in Table 8; all mixing was conducted at high shear (15000 rpm). Examples 14-1 and 14-2 use IC3110 aerogel (0.1-0.7 mm diameter, Cabot Corporation). Examples 14-3 and 14-4 use ENTERA EV5200 aerogel from Cabot Corporation. For all examples, 44 micron rutile titania sand (Loudwolf), F600 silicon carbide (Sturbridge Metallurgical Services), and aluminum trihydroxide (ATH, Thermo Fisher Scientific) were employed, while the polymer binders were polyurethane binder (Joncryl FLX 5201 polyurethane from BASF) and silicone binder (Dowsil HV 496 resin, Dow). Following mixing, the resulting slurry was added to the remaining process water. To destabilize the slurry system, a flocculant (Examples 14-1, 14-3, 14-4: polydiallyldimethylammonium chloride (polydiallyldimethylammonium chloride (PDADMAC), 60-80 cps viscosity, 20wt% solids from Sigma Aldrich); Example 14-2: Superfloc 581 flocculant, 50wt% polymer emulsion from Kemira) was added to the slurry in the quantities indicated in Table 8 to produce flocs. In Example 14-2, the as-received flocculant was diluted 1:1 with deionized water (i.e., to a total solids loading of 25%).

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity as described above. After drying, the blankets were compressed between two platens to form a thin blanket 1-1.2 mm thick and then evaluated for tensile strength as described above. The total polymer loading was 22-24 wt % of the total solids in the slurry and 14-16 wt% excluding dispersant and defoamer. The resulting aerogel compositions were expected to fulfill the criteria for UL94-V0 rating.

**Table 8**

| **Component (all in grams)** | **14-1** | **14-2** | **14-3** | **14-4** |
|---|---|---|---|---|
| **Aerogel** | 9.54 | 9.54 | 9.54 | 9.54 |
| **Belcotex fibers** | - | - | 4.30 | - |
| **3 mm Glass fibers** | 4 | 3.2 | - | - |
| **6 mm glass fibers** | - | - | 1.14 | 1.14 |
| **Milled Glass fibers** | 0.8 | - | - | - |
| **Aramid fibers** | - | 0.8 | - | 3.63 |
| **Aramid pulp** | - | 0.8 | - | - |
| **Rutile sand** | 0.15 | 0.15 | 1.38 | 1.38 |
| **Mixing sequence** | Add all fibers, aerogel, particulates, mix 40 s, add binders and mix 20 s | Add all aramid and mix 80 s, add remaining fiber, aerogel, particulates and mix 40 s, add binders and mix 20s | Add all fibers, aerogel, and particulates, mix 40 s; add binder and mix 20 s | Add glass fiber and mix 40 s, add aramid fiber, aerogel and particulates and mix 40 s, add binders and mix 20 s |
| **Silicon Carbide** | 1.38 | 1.38 | 1.38 | 1.38 |
| **ATH** | 1 | 1 | 0.44 | 0.44 |
| **Surfactant** | 1.76 | 1.76 | 1.76 | 1.76 |
| **Nalclear polymer** | 1.98 | 1.98 | 1.98 | 1.98 |
| **Foamkill** | 1.76 | 1.76 | 1.76 | 1.76 |
| **PU binder** | 0.50 | 0.50 | 0.50 | 0.50 |
| **Silicone binder** | 3.86 | 3.86 | 3.86 | 3.86 |
| **Flocculant** | 2.27 | 5.6 | 2.68 | 2.13 |
| **Tensile Strength (MPa)** | 1.09 | 1.42 | 0.46 | 0.84 |
| **Thermal Conductivity at 25 °C (mW/m.K)** | Between 23-25 | 24.5 | 25.0 | 24.8 |
| **Density (g/cm³) following compression** | | 0.38 | 0.35 | |

### Example 15

Experiments were conducted to evaluate the properties and/or performance of several non-woven blankets. Ceramic fiber (Fiberfrax^{®} 7001 C5 ceramic fiber) was used in combination with 6 mm E-glass chopped fibers with a diameter of 6 µm, from Lauscha Fiber International, in the amounts listed in Table 9.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form a one (1) Liter white (process) aqueous concentrate in a WARING benchtop heavy duty blender, according to the formulations in Table 9. Mixing was conducted for 10 sec at high shear to form process water. The concentrate was then diluted to approximate 3 Liters of water. After mixing, approximately 1.5 Liters of the diluted process water was transferred to the Waring blender. The glass fiber, ENTERA EV5200 aerogel particles (Cabot Corporation) 44 micron rutile titania sand (Loudwolf), F600 silicon carbide (Sturbridge Metallurgical Services), and aluminum trihydroxide (ATH, Thermo Fisher Scientific), were added to the WARING heavy duty blender in the quantities listed in Table 9. The mixture in the blender was mixed for 40 sec at high shear (15000 rpm). The ceramic fiber, polyurethane binder (Joncryl FLX 5201 polyurethane from BASF) and silicone binder (Dowsil HV 496 resin, Dow) were added to the blender and mixed for another 20 sec at high shear to make a slurry, which was added to the remaining process water. To destabilize the slurry system, a flocculant (polydiallyldimethylammonium chloride (PDADMAC), 60-80 cps viscosity, 20wt% solids from Sigma Aldrich) was added to the slurry in the amount indicated in Table 9 to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 2 mm to squeeze out some of the water and flatten the blanket to a consistent surface. All blankets were removed from the forming wire and placed in a drying oven at 120° C for about 20min and then analyzed for room temperature thermal conductivity as described above. After drying, the blankets were compressed between two platens to form a thin blanket 1-1.2 mm thick and then evaluated for tensile strength as described above. The total polymer loading was about 20 wt% of the total solids in the slurry and 11 wt% excluding dispersant and defoamer. The resulting aerogel compositions were expected to fulfill the criteria for UL94-V0 rating.

**Table 9**

| **Component (all in grams)** | **15-1** | **15-2** | **15-3** | **15-4** | **15-5** | **15-6** | **115-7** |
|---|---|---|---|---|---|---|---|
| **Aerogel:fiber ratio; Aerogel loading (dry basis)** | 0 | 1:10; 6 wt% | 1:3; 17 wt% | 1:1; 33 wt% | 2:1; 45 wt% | 5:1; 56 wt% | 10:1; 61 wt% |
| **Aerogel** | 0.00 | 1.49 | 4.10 | 8.20 | 10.93 | 13.66 | 14.90 |
| **Ceramic fibers** | 15.25 | 12.42 | 10.25 | 6.83 | 4.55 | 2.28 | 1.24 |
| **Glass fibers** | 1.14 | 2.48 | 2.05 | 1.37 | 0.91 | 0.46 | 0.25 |
| **Rutile sand** | 1.38 | 1.38 | 1.38 | 1.38 | 1.38 | 1.38 | 1.38 |
| **Silicon Carbide** | 1.38 | 1.38 | 1.38 | 1.38 | 1.38 | 1.38 | 1.38 |
| **ATH** | 0.44 | 0.44 | 0.44 | 0.44 | 0.44 | 0.44 | 0.44 |
| **Surfactant** | 1.76 | 1.76 | 1.76 | 1.76 | 1.76 | 1.76 | 1.76 |
| **Nalclear polymer** | 1.98 | 1.98 | 1.98 | 1.98 | 1.98 | 1.98 | 1.98 |
| **Foamkill** | 1.76 | 1.76 | 1.76 | 1.76 | 1.76 | 1.76 | 1.76 |
| **PU binder** | 0.50 | 0.50 | 0.50 | 0.50 | 0.50 | 0.50 | 0.50 |
| **Silicone binder** | 3.86 | 3.86 | 3.86 | 3.86 | 3.86 | 3.86 | 3.86 |
| **Flocculant** | 3.61 | 2.93 | 2.94 | 2.76 | 2.72 | 2.68 | 2.94 |
| **Tensile Strength (MPa)** | 1.6 | 1.3 | 1.3 | 0.7 | 0.6 | 0.2 | 0.1 |
| **Thermal Conductivity at 25 °C (mW/m.K)** | 53.3 | 45.5 | 31.5 | 27.0 | 24.5 | 20.9 | 18.8 |
| **Density (g/cm³) following compression** | 0.45 | 0.32 | 0.29 | 0.23 | 0.21 | 0.18 | 0.17 |

### Example 16

Experiments were conducted to evaluate the properties and/or performance of several non-woven blankets. Glass microfiber (Microfiber B-06-F from Unifrax) was used in combination with 6 mm E-glass chopped fibers with a diameter of 6 µm, from Lauscha Fiber International, in the amounts listed in Table 10.

The blankets were produced in a wet laid process according to the following procedure.

Dispersant (Jeffamine M2070, Huntsman), Nalclear 71605 polymer (Nalco) and Foamkill^{™} 830 defoamer (Crucible Chemical) were dispersed in water to form three liters (Example 16-1) or two liters (Example 16-2) of white (process) aqueous dispersion in a WARING benchtop heavy duty blender, according to the formulations in Table 10. Mixing was conducted for 10 sec at high shear to form process water. After mixing, approximately 1.5 Liters of the process water was removed from the Waring blender and reserved. The chopped glass fiber was added to the WARING heavy duty blender in the quantities listed in Table 10. The mixture in the blender was mixed for 40 sec at high shear (15000 rpm). ENTERA EV5400 aerogel particles (0.1-0.5 mm particle size, Cabot Corporation), glass microfiber, 44 micron rutile titania sand (Loudwolf), F600 silicon carbide (Sturbridge Metallurgical Services), and aluminum trihydroxide (ATH, Thermo Fisher Scientific), were added to the blender and mixed for 40 seconds at high shear. The polyurethane binder (Joncryl FLX 5201 polyurethane from BASF) and silicone binder (Dowsil HV 496 resin, Dow) were added to the blender and mixed for another 20 sec at high shear to make a slurry, which was added to the reserved process water. To destabilize the slurry system, a flocculant (polydiallyldimethylammonium chloride (PDADMAC), 60-80 cps viscosity, 20wt% solids from Sigma Aldrich) was added to the slurry in the amount indicated in Table 10 to produce flocs.

After flocculation, the slurry was drained through a single layer wet-lay forming wire to produce a 30cm x 30cm blanket sheet. The blanket and forming wire were then passed over vacuum to remove additional water from the aerogel floc. Samples were compressed with a heavy roller to a thickness of about 1.8 mm (Example 16-1) and 1 mm (Example 16-2) to squeeze out some of the water and flatten the blanket to a consistent surface. All blankets were removed from the forming wire and placed in a drying oven at 120° C for about 20min and then analyzed for room temperature thermal conductivity as described above. Example 16-1 was evaluated for tensile strength without further compression. After drying, Example 16-2 was compressed between two platens to form a thin blanket about 0.55 mm thick and then evaluated for tensile strength as described above. The total polymer loading was about 22 wt% of the total solids in the slurry for both Examples and 12 wt% excluding dispersant and defoamer. The resulting aerogel compositions were expected to fulfill the criteria for UL94-V0 rating.

**Table 10**

| **Component (all in grams)** | **16-1** | **16-2** |
|---|---|---|
| **Aerogel** | 9.54 | 6.36 |
| **Chopped Glass fibers** | 1.14 | 0.76 |
| **Glass microfibers** | 4.3 | 2.87 |
| **Rutile sand** | 0.15 | 0.10 |
| **Silicon Carbide** | 1.38 | 0.92 |
| **ATH** | 1.00 | 0.67 |
| **Surfactant** | 1.76 | 1.17 |
| **Nalclear polymer** | 1.98 | 1.32 |
| **Foamkill** | 1.76 | 1.17 |
| **PU binder** | 0.50 | 0.33 |
| **Silicone binder** | 3.86 | 2.57 |
| **Flocculant** | 2.67 | 1.74 |
| **Tensile Strength (MPa)** | 1.3 | 2.4 |
| **Thermal Conductivity at 25 °C (mW/m.K)** | 25.4 | 24.5 |
| **Density (g/cm³)** | 0.21 | 0.53* |

| | | |
|---|---|---|
| *Density measured following compression | | |

### Example 17

Ceramic fiber (Fiberfrax^{®} 7001 C5 ceramic fiber) is used in combination with 6 mm E-glass chopped fibers with a diameter of 6 µm, from Lauscha Fiber International, in the amounts listed in Table 11.

The blankets are produced in a wet laid process according to the following procedure.

Dispersant (Jeffamine M2070, Huntsman), Nalclear 71605 polymer (Nalco) and Foamkill^{™} 830 defoamer (Crucible Chemical) are dispersed in water to form a one (1) Liter white (process) aqueous concentrate in a WARING benchtop heavy duty blender, according to the formulations in Table 11. Mixing is conducted for 10 sec at high shear to form process water. The concentrate is then diluted to approximate 3 Liters of water. After mixing, approximately 1.5 Liters of the diluted process water is transferred to the Waring blender. The glass fiber, ENTERA EV5200 aerogel particles (Cabot Corporation) 44 micron rutile titania sand (Loudwolf), F600 silicon carbide (Sturbridge Metallurgical Services), and aluminum trihydroxide (ATH, Thermo Fisher Scientific), are added to the WARING heavy duty blender in the quantities listed in Table 11. The mixture in the blender is mixed for 40 sec at high shear (15000 rpm). The ceramic fiber and epoxy binder (EPI-REZ 5003-W-55, 58% solids, Westlake) are added to the blender and mixed for another 20 sec at high shear to make a slurry, which is added to the remaining process water. To destabilize the slurry system, a flocculant (polydiallyldimethylammonium chloride (PDADMAC), 60-80 cps viscosity, 20wt% solids from Sigma Aldrich) is added to the slurry until flocs appear.

After flocculation, the slurry is drained through a single layer wet-lay forming wire to produce a 30cm x 30cm blanket sheet. The blanket and forming wire are then passed over vacuum to remove additional water from the aerogel floc. Samples are compressed with a heavy roller to a thickness of about 4 mm (Example 17-1) or 6 mm (Example 17-2) to squeeze out some of the water and flatten the blanket to a consistent surface. All blankets are removed from the forming wire and placed in a drying oven at 120° C for about 20min. The total polymer loading is about 20% of the total solids in the slurry. The resulting aerogel compositions are expected to have a thermal conductivity less than 25 or 30 mW/m.K and a tensile strength greater than 0.1 or 0.2 MPa and to fulfill the criteria for UL94-V0 rating.

**Table 11**

| **Component (all in grams)** | **17-1 (4mm)** | **17-2 (6mm)** |
|---|---|---|
| **Aerogel** | 21.86 | 32.79 |
| **Ceramic fibers** | 9.1 | 13.65 |
| **Glass fibers** | 1.82 | 2.73 |
| **Rutile sand** | 2.76 | 4.14 |
| **Silicon Carbide** | 2.76 | 4.14 |
| **ATH** | 0.88 | 1.32 |
| **Surfactant** | 3.52 | 5.28 |
| **Nalclear polymer** | 3.97 | 5.95 |
| **Foamkill** | 3.52 | 5.28 |
| **Epoxy binder** | 5.84 | 8.76 |

While this invention has been particularly shown and described with references to preferred embodiments thereof, it will be understood by those skilled in the art that various changes in form and details may be made therein without departing from the scope of the invention encompassed by the appended claims.

## Claims

1. A heat control article in form of a nonwoven blanket, sheet, mat or pad, comprising an aerogel composition, comprising:
hydrophobic silica aerogel particles;
a fibrous component that includes one or more materials selected from the group consisting of polymer fibers and inorganic fibers, wherein the ratio of the aerogel particles:fibrous component is from 1:3 to 10:1 by weight; and
3- 25 % of polymer by weight, based on the total weight of the composition,
wherein the composition has a thickness of 0.3 to 6 mm, a thermal conductivity up to 32 mW/m.K at 25 °C, a UL-94 rating of V0, a tensile strength from 0.09 to 5 MPa, and a density of 0.1-0.6 g/cm³.

2. The heat control article of claim 1, wherein the composition comprises 15-65% by weight of aerogel particles.

3. The heat control article of any of claims 1-2, wherein the fibrous component is present in an amount from 5 to 55 wt%.

4. The heat control article of any of claims 1-3, wherein the fibrous component comprises a blend of a primary fiber comprising glass fibers or ceramic fibers and one or more secondary fibers selected from the group consisting of ceramic wool, glass fibers, ceramic fibers, aramid fibers, PBI fibers, cellulose fibers, cotton fibers, carbon fibers, acrylic fibers, polyvinyl alcohol (PVA) fibers, phenolic fibers, polyolefin fibers, and mixtures of any of the above.

5. The heat control article of any of claims 1-4, further comprising one or more of a fire retardant, a flame retardant, a heat absorbing material, or a phase change material, or an opacifier selected from the group consisting of carbon black, mica, alumina, graphite, titanium dioxide, rutile sand, iron oxide, silicon carbide (SiC), graphite, zirconium dioxide, and combinations of two or more of these.

6. The heat control article of any of claims 1-5, wherein the polymer comprises a surfactant, a dispersant, or both.

7. The heat control article of any of claims 1-6, wherein the polymer comprises a binder selected from the group consisting of silicone, polyurethane, polyvinyl alcohol, polyvinylidene fluoride, polyethylene terephthalate, polybutylene terephthalate, styrene-butadiene copolymers, and acrylate (acrylic) polymers.

8. The heat control article of any of claims 1-7, wherein the polymer comprises a flocculation system comprising a flocculation agent and a flocculation polymer, an optional binder, a dispersant, and an optional defoaming agent, wherein the total amount of flocculation system and optional binder in the composition is from 3 to 20% by weight.

9. The heat control article of any of claims 1-8, wherein a) the heat control article further comprises one or more layers independently comprising a woven polymer mat, a foam pad, a mica sheet, or a heat conducting material, b) at least one surface of the heat control article is covered with a polymer film, wherein the polymer is selected from a silicone polymer, polyvinylidene fluoride, polyethylene terephthalate, and chlorinated polyethylene, the polymer film optionally comprising a reinforcing fiber, or both.

10. A method of making a heat control article in form of a nonwoven blanket, sheet, mat or pad, comprising a nonwoven aerogel composition, the method comprising:
mixing hydrophobic silica aerogel particles, a fibrous component, at least one polymeric component, and an aqueous solvent to form an aqueous slurry, wherein the ratio of the aerogel particles:fibrous component is from 1:3 to 10:1 by weight;
flocculating and/or coagulating the aqueous slurry to form a floc, the floc comprising at least a portion of the aerogel particles, fibrous component, and polymeric component, and a surnatant;
dewatering the floc; and
drying the floc to produce the nonwoven aerogel composition having a thickness of 0.3 to 6 mm, a thermal conductivity up to 32 mW/m.K at 25 °C, a UL-94 rating of V0, a tensile strength from 0.09 to 5 MPa, and a density of 0.1-0.6 g/cm³,
wherein the total amount of polymeric component in the floc and the surnatant is from 3-25% based on the total amount of material in the floc and the surnatant excluding the aqueous solvent.

11. The method of claim 10, wherein the total amount of solid material, including the polymeric component, in the aqueous slurry is from 5% to 25% by weight.

12. The method of any of claims 10-11, further comprising compressing the dewatered floc or the nonwoven aerogel blanket, or both.

13. The method of any of claims 10-12, wherein the total amount of aerogel particles in the floc and the surnatant is 15-65% by weight excluding the aqueous solvent.

14. The method of any of claims 10-13, wherein the fibrous component is present in the floc and the surnatant in an amount from 5 to 55 wt% excluding the aqueous solvent.

15. The method of any of claims 10-14, wherein the fibrous component comprises a blend of a primary fiber comprising glass fibers or ceramic fibers and one or more secondary fibers selected from the group consisting of ceramic wool, glass fibers, ceramic fibers, aramid fibers, PBI fibers, cellulose fibers, cotton fibers, carbon fibers, acrylic fibers, polyvinyl alcohol (PVA) fibers, phenolic fibers, polyolefin fibers, and mixtures of any of the above.

16. The method of any of claims 10-15, wherein mixing further comprises including one or more of a fire retardant, a flame retardant, a heat absorbing material, a phase change material, or an opacifier in the aqueous slurry, wherein the opacifier is selected from the group consisting of carbon black, mica, alumina, graphite, titanium dioxide, rutile sand, iron oxide, silicon carbide (SiC), graphite, zirconium dioxide, and combinations of two or more of these.

17. The method of any of claims 10-16, wherein the polymeric component comprises a surfactant, a dispersant, or both.

18. The method of any of claims 10-17, wherein the polymeric component further comprises a defoamer.

19. The method of any of claims 10-18, wherein the polymeric component comprises a binder selected from the group consisting of silicone, polyurethane, polyvinyl alcohol, polyvinylidene fluoride, polyethylene terephthalate, polybutylene terephthalate, styrene-butadiene copolymers, and acrylate (acrylic) polymers.

20. The method of any of claims 10-19, wherein the proportion of polymeric component by weight in the floc and the surnatant, excluding the aqueous solvent, is 4 to 20%.

21. The method of any of claims 10-20, wherein mixing further comprises including elastomeric particles in the aqueous slurry.

22. The method of any of claims 10-21, wherein the polymeric component includes a flocculation polymer, and wherein a) the flocculation agent is cationic and the flocculation polymer is anionic or b) the flocculation agent is anionic and the flocculation polymer is cationic, wherein the total amount of flocculation agent, flocculation polymer and optional binder in the floc and the surnatant, excluding the aqueous solvent, is from 3 to 20% by weight, for example, from 4 to 16% by weight.

23. The method of any of claims 10-22, further comprising a) coating a polymer or oligomer solution or emulsion on the dried aerogel composition and curing the solution or emulsion to form a coating on the aerogel composition, b) treating the aerogel composition with a hydrophobizing agent, or both.

## Patentansprüche

1. Artikel zur Wärmeregulation in Form einer Vliesdecke, eines Vliesflächengebildes, einer Vliesmatte oder eines Vliespads, umfassend eine Aerogelzusammensetzung, umfassend:
hydrophobe Siliciumdioxid-Aerogelpartikel;
eine Faserkomponente, die ein oder mehrere Materialien einschließt, ausgewählt aus der Gruppe bestehend aus Polymerfasern und anorganischen Fasern, wobei das Verhältnis der Aerogelpartikel: Faserkomponente 1:3 bis 10:1 nach Gewicht beträgt; und
3 - 25 Gew.-% Polymer, bezogen auf das Gesamtgewicht der Zusammensetzung,
wobei die Zusammensetzung eine Dicke von 0,3 bis 6 mm, eine Wärmeleitfähigkeit von bis zu 32 mW/m·K bei 25 °C, eine UL-94-Einstufung von V0, eine Zugfestigkeit von 0,09 bis 5 MPa und eine Dichte von 0,1 - 0,6 g/cm³ aufweist.

2. Artikel zur Wärmeregulation nach Anspruch 1, wobei die Zusammensetzung 15 - 65 Gew.-% Aerogelpartikel umfasst.

3. Artikel zur Wärmeregulation nach einem der Ansprüche 1 - 2, wobei die Faserkomponente in einer Menge von 5 bis 55 Gew.-% vorhanden ist.

4. Artikel zur Wärmeregulation nach einem der Ansprüche 1 - 3, wobei die Faserkomponente eine Mischung aus einer Primärfaser, umfassend Glasfasern oder Keramikfasern, und einer oder mehreren Sekundärfasern, ausgewählt aus der Gruppe bestehend aus Keramikwolle, Glasfasern, Keramikfasern, Aramidfasern, PBI-Fasern, Cellulosefasern, Baumwollfasern, Kohlenstofffasern, Acrylfasern, Polyvinylalkohol(PVA)-Fasern, Phenolfasern, Polyolefinfasern und Mischungen von beliebigen der Vorstehenden umfasst.

5. Artikel zur Wärmeregulation nach einem der Ansprüche 1 - 4, ferner umfassend eines oder mehrere aus einem Feuerschutzmittel, einem Flammschutzmittel, einem wärmeabsorbierenden Material oder einem Phasenwechselmaterial oder einem Trübungsmittel, ausgewählt aus der Gruppe bestehend aus Ruß, Glimmer, Aluminiumoxid, Graphit, Titandioxid, Rutilsand, Eisenoxid, Siliciumcarbid (SiC), Graphit, Zirkoniumdioxid und Kombinationen von zwei oder mehr davon.

6. Artikel zur Wärmeregulation nach einem der Ansprüche 1 - 5, wobei das Polymer ein Tensid, ein Dispergiermittel oder beides umfasst.

7. Artikel zur Wärmeregulation nach einem der Ansprüche 1 - 6, wobei das Polymer ein Bindemittel umfasst, ausgewählt aus der Gruppe bestehend aus Silikon, Polyurethan, Polyvinylalkohol, Polyvinylidenfluorid, Polyethylenterephthalat, Polybutylenterephthalat, Styrol-Butadien-Copolymeren und Acrylat-(Acryl-)Polymeren.

8. Artikel zur Wärmeregulation nach einem der Ansprüche 1 - 7, wobei das Polymer ein Flockungssystem umfasst, umfassend ein Flockungsmittel und ein Flockungspolymer, ein optionales Bindemittel, ein Dispergiermittel und ein optionales Entschäumungsmittel, wobei die Gesamtmenge des Flockungssystems und des optionalen Bindemittels in der Zusammensetzung 3 bis 20 Gew.-% beträgt.

9. Artikel zur Wärmeregulation nach einem der Ansprüche 1 - 8, wobei a) der Artikel zur Wärmeregulation ferner eine oder mehrere Schichten umfasst, unabhängig voneinander umfassend eine gewebte Polymermatte, ein Schaumstoffpad, eine Glimmerfolie oder ein wärmeleitendes Material, b) mindestens eine Oberfläche des Artikels zur Wärmeregulation mit einem Polymerfilm bedeckt ist, wobei das Polymer ausgewählt ist aus einem Silikonpolymer, Polyvinylidenfluorid, Polyethylenterephthalat und chloriertem Polyethylen, wobei der Polymerfilm gegebenenfalls eine Verstärkungsfaser umfasst, oder beides.

10. Verfahren zum Herstellen eines Artikels zur Wärmeregulation in Form einer Vliesdecke, eines Vliesflächengebildes, einer Vliesmatte oder eines Vliespads, umfassend eine Vlies-Aerogelzusammensetzung, wobei das Verfahren umfasst:
Mischen von hydrophoben Siliciumdioxid-Aerogelpartikeln, einer Faserkomponente, mindestens einer polymeren Komponente und einem wässrigen Lösungsmittel, um eine wässrige Aufschlämmung zu bilden, wobei das Verhältnis der Aerogelpartikel:Faserkomponente 1:3 bis 10:1 nach Gewicht beträgt;
Ausflocken und/oder Koagulieren der wässrigen Aufschlämmung, um eine Flocke, umfassend mindestens einen Teil der Aerogelpartikel, der Faserkomponente und der polymeren Komponente, und eine oben schwimmende Phase zu bilden;
Entwässern der Flocke; und
Trocknen der Flocke, um die Vlies-Aerogelzusammensetzung mit einer Dicke von 0,3 bis 6 mm, einer Wärmeleitfähigkeit von bis zu 32 mW/m·K bei 25 °C, einer UL-94-Einstufung von V0, einer Zugfestigkeit von 0,09 bis 5 MPa und einer Dichte von 0,1 - 0,6 g/cm³ herzustellen,
wobei die Gesamtmenge der polymeren Komponente in der Flocke und der oben schwimmenden Phase 3 - 25 Gew.-% bezogen auf die Gesamtmenge des Materials in der Flocke und der oben schwimmenden Phase unter Ausschluss des wässrigen Lösungsmittels beträgt.

11. Verfahren nach Anspruch 10, wobei die Gesamtmenge des festen Materials, einschließlich der polymeren Komponente, in der wässrigen Aufschlämmung 5 bis 25 Gew.-% beträgt.

12. Verfahren nach einem der Ansprüche 10 - 11, ferner umfassend das Verdichten der entwässerten Flocke oder der Vlies-Aerogeldecke oder von beiden.

13. Verfahren nach einem der Ansprüche 10 - 12, wobei die Gesamtmenge der Aerogelpartikel in der Flocke und der oben schwimmenden Phase 15 - 65 Gew.-% unter Ausschluss des wässrigen Lösungsmittels beträgt.

14. Verfahren nach einem der Ansprüche 10 - 13, wobei die Faserkomponente in der Flocke und der oben schwimmenden Phase in einer Menge von 5 bis 55 Gew.-% unter Ausschluss des wässrigen Lösungsmittels vorhanden ist.

15. Verfahren nach einem der Ansprüche 10 - 14, wobei die Faserkomponente eine Mischung aus einer Primärfaser, umfassend Glasfasern oder Keramikfasern, und einer oder mehreren Sekundärfasern, ausgewählt aus der Gruppe bestehend aus Keramikwolle, Glasfasern, Keramikfasern, Aramidfasern, PBI-Fasern, Cellulosefasern, Baumwollfasern, Kohlenstofffasern, Acrylfasern, Polyvinylalkohol(PVA)-Fasern, Phenolfasern, Polyolefinfasern und beliebigen Mischungen davon, umfasst.

16. Verfahren nach einem der Ansprüche 10 - 15, wobei das Mischen ferner das Einschließen eines oder mehrerer aus einem Feuerschutzmittel, einem Flammschutzmittel, einem wärmeabsorbierenden Material, einem Phasenwechselmaterial oder einem Trübungsmittel in die wässrige Aufschlämmung umfasst, wobei das Trübungsmittel ausgewählt ist aus der Gruppe bestehend aus Ruß, Glimmer, Aluminiumoxid, Graphit, Titandioxid, Rutilsand, Eisenoxid, Siliciumcarbid (SiC), Graphit, Zirkoniumdioxid und Kombinationen von zwei oder mehr davon.

17. Verfahren nach einem der Ansprüche 10 - 16, wobei die polymere Komponente ein Tensid, ein Dispergiermittel oder beides umfasst.

18. Verfahren nach einem der Ansprüche 10 - 17, wobei die polymere Komponente ferner einen Entschäumer umfasst.

19. Verfahren nach einem der Ansprüche 10 - 18, wobei die polymere Komponente ein Bindemittel umfasst, ausgewählt aus der Gruppe bestehend aus Silikon, Polyurethan, Polyvinylalkohol, Polyvinylidenfluorid, Polyethylenterephthalat, Polybutylenterephthalat, Styrol-Butadien-Copolymeren und Acrylat-(Acryl-)Polymeren.

20. Verfahren nach einem der Ansprüche 10 - 19, wobei der Anteil der polymeren Komponente nach Gewicht in der Flocke und der oben schwimmenden Phase unter Ausschluss des wässrigen Lösungsmittels 4 bis 20 Gew.-% beträgt.

21. Verfahren nach einem der Ansprüche 10 - 20, wobei das Mischen ferner das Einschließen von elastomeren Partikeln in die wässrige Aufschlämmung umfasst.

22. Verfahren nach einem der Ansprüche 10 - 21, wobei die polymere Komponente ein Flockungspolymer einschließt und wobei a) das Flockungsmittel kationisch und das Flockungspolymer anionisch ist oder b) das Flockungsmittel anionisch und das Flockungspolymer kationisch ist, wobei die Gesamtmenge des Flockungsmittels, des Flockungspolymers und des optionalen Bindemittels in der Flocke und der oben schwimmenden Phase, unter Ausschluss des wässrigen Lösungsmittels, 3 bis 20 Gew.-%, beispielsweise 4 bis 16 Gew.-%, beträgt.

23. Verfahren nach einem der Ansprüche 10 - 22, ferner umfassend a) das Aufbringen einer Polymer- oder Oligomerlösung oder -emulsion auf die getrocknete Aerogelzusammensetzung und das Aushärten der Lösung oder Emulsion, um eine Beschichtung auf der Aerogelzusammensetzung zu bilden, b) das Behandeln der Aerogelzusammensetzung mit einem Hydrophobierungsmittel oder beides.

## Revendications

1. Article de contrôle thermique sous forme de couverture, de feuille, de mat ou de coussin non tissé, comprenant une composition d'aérogel, et comprenant :
des particules d'aérogel de silice hydrophobes ;
un composant fibreux qui inclut un ou plusieurs matériaux sélectionnés dans le groupe constitué par les fibres polymères et les fibres inorganiques, dans lequel le ratio des particules d'aérogel par rapport au composant fibreux est de 1:3 à 10:1 en masse ; et
3 % à 25 % de polymère en masse, sur la base de la masse totale de la composition,
dans lequel la composition présente une épaisseur de 0,3 à 6 mm, une conductivité thermique allant jusqu'à 32 mW/m×K à 25 °C, un classement UL-94 V0, une résistance à la traction de 0,09 à 5 MPa, et une densité de 0,1 à 0,6 g/cm³.

2. Article de contrôle thermique selon la revendication 1, dans lequel la composition comprend de 15 % à 65 % en masse de particules d'aérogel.

3. Article de contrôle thermique selon l'une quelconque des revendications 1 et 2, dans lequel la quantité de composant fibreux est de 5 % à 55 % en masse.

4. Article de contrôle thermique selon l'une quelconque des revendications 1 à 3, dans lequel le composant fibreux comprend un mélange d'une fibre primaire, comprenant des fibres de verre ou des fibres céramiques, et d'une ou plusieurs fibres secondaires, sélectionnées dans le groupe constitué par la laine céramique, les fibres de verre, les fibres céramiques, les fibres aramides, les fibres de polybenzimidazole (PBI), les fibres de cellulose, les fibres de coton, les fibres de carbone, les fibres acryliques, les fibres d'alcool polyvinylique (PVA), les fibres phénoliques, les fibres de polyoléfines, et tout mélange de ces fibres.

5. Article de contrôle thermique selon l'une quelconque des revendications 1 à 4, comprenant en outre un ou plusieurs composants parmi un retardateur de feu, un retardateur de flamme, un matériau absorbant la chaleur ou un matériau à changement de phase, ou un opacifiant sélectionné dans le groupe constitué par le noir de carbone, le mica, l'alumine, le graphite, le dioxyde de titane, le sable de rutile, l'oxyde de fer, le carbure de silicium (SiC), le dioxyde de zirconium, et les combinaisons de deux ou plusieurs de ces opacifiants.

6. Article de contrôle thermique selon l'une quelconque des revendications 1 à 5, dans lequel le polymère comprend un tensioactif, un dispersant, ou les deux.

7. Article de contrôle thermique selon l'une quelconque des revendications 1 à 6, dans lequel le polymère comprend un liant sélectionné dans le groupe constitué par le silicone, le polyuréthane, l'alcool polyvinylique, le polyfluorure de vinylidène, le polytéréphtalate d'éthylène, le polytéréphtalate de butylène, les copolymères styrène-butadiène et les polymères d'acrylate (acryliques).

8. Article de contrôle thermique selon l'une quelconque des revendications 1 à 7, dans lequel le polymère comprend un système de floculation comprenant un agent de floculation et un polymère de floculation, un liant facultatif, un dispersant et un agent antimoussant facultatif, dans lequel la quantité totale du système de floculation et du liant facultatif dans la composition est de 3 % à 20 % en masse.

9. Article de contrôle thermique selon l'une quelconque des revendications 1 à 8, dans lequel a) l'article de contrôle thermique comprend en outre une ou plusieurs couches comprenant indépendamment un mat de polymère tissé, un coussinet en mousse, une feuille de mica ou un matériau thermoconducteur, b) au moins une surface de l'article de contrôle thermique est recouverte d'un film polymère, dans lequel le polymère est sélectionné parmi un polymère de silicone, le polyfluorure de vinylidène, le polytéréphtalate d'éthylène et le polyéthylène chloré, le film polymère comprenant facultativement une fibre de renfort, ou les deux.

10. Procédé de fabrication d'un article de contrôle thermique sous forme d'une couverture, d'une feuille, d'un mat ou d'un coussin non tissé, comprenant une composition d'aérogel non tissé, le procédé comprenant :
le mélange de particules d'aérogel de silice hydrophobes, d'un composant fibreux, d'au moins un composant polymère et d'un solvant aqueux pour former une suspension aqueuse, dans lequel le ratio des particules d'aérogel par rapport au composant fibreux est de 1:3 à 10:1 en masse ;
la floculation et/ou la coagulation de la suspension aqueuse pour former un floc, le floc comprenant au moins une portion des particules d'aérogel, un composant fibreux et un composant polymère, ainsi qu'un surnageant ;
l'égouttage du floc ; et
le séchage du floc pour produire la composition d'aérogel non tissé ayant une épaisseur de 0,3 à 6 mm, une conductivité thermique jusqu'à 32 mW/m×K à 25 °C, un classement UL-94 V0, une résistance à la traction de 0,09 à 5 MPa, et une densité de 0,1 à 0,6 g/cm³,
dans lequel la quantité totale de composant polymère dans le floc et le surnageant est de 3 % à 25 % sur la base de la quantité totale de matériau dans le floc et le surnageant, à l'exclusion du solvant aqueux.

11. Procédé selon la revendication 10, dans lequel la quantité totale de matériau solide, y compris le composant polymère, dans la suspension aqueuse est de 5 % à 25 % en masse.

12. Procédé selon l'une quelconque des revendications 10 et 11, comprenant en outre la compression du floc égoutté ou de la couverture d'aérogel non tissée, ou des deux.

13. Procédé selon l'une quelconque des revendications 10 à 12, dans lequel la quantité totale de particules d'aérogel dans le floc et le surnageant est de 15 % à 65 % en masse, à l'exclusion du solvant aqueux.

14. Procédé selon l'une quelconque des revendications 10 à 13, dans lequel le composant fibreux est présent dans le floc et le surnageant dans une quantité de 5 % à 55 % en masse, à l'exclusion du solvant aqueux.

15. Procédé selon l'une quelconque des revendications 10 à 14, dans lequel le composant fibreux comprend un mélange d'une fibre primaire, comprenant des fibres de verre ou des fibres céramiques, et d'une ou plusieurs fibres secondaires, sélectionnées dans le groupe constitué par la laine céramique, les fibres de verre, les fibres céramiques, les fibres aramides, les fibres de polybenzimidazole (PBI), les fibres de cellulose, les fibres de coton, les fibres de carbone, les fibres acryliques, les fibres d'alcool polyvinylique (PVA), les fibres phénoliques, les fibres de polyoléfines, et tout mélange de ces fibres.

16. Procédé selon l'une quelconque des revendications 10 à 15, dans lequel le mélange comprend en outre l'inclusion d'un ou plusieurs composants parmi un retardateur de feu, un retardateur de flamme, un matériau absorbant la chaleur, un matériau à changement de phase ou un opacifiant dans la suspension aqueuse, dans lequel l'opacifiant est sélectionné dans le groupe constitué par le noir de carbone, le mica, l'alumine, le graphite, le dioxyde de titane, le sable de rutile, l'oxyde de fer, le carbure de silicium (SiC), le dioxyde de zirconium, et les combinaisons de deux ou plusieurs de ces opacifiants.

17. Procédé selon l'une quelconque des revendications 10 à 16, dans lequel le composant polymère comprend un tensioactif, un dispersant, ou les deux.

18. Procédé selon l'une quelconque des revendications 10 à 17, dans lequel le composant polymère comprend en outre un antimoussant.

19. Procédé selon l'une quelconque des revendications 10 à 18, dans lequel le composant polymère comprend un liant sélectionné dans le groupe constitué par le silicone, le polyuréthane, l'alcool polyvinylique, le polyfluorure de vinylidène, le polytéréphtalate d'éthylène, le polytéréphtalate de butylène, les copolymères styrène-butadiène et les polymères d'acrylate (acryliques).

20. Procédé selon l'une quelconque des revendications 10 à 19, dans lequel la proportion de composant polymère en masse dans le floc et le surnageant, à l'exclusion du solvant aqueux, est de 4 % à 20 %.

21. Procédé selon l'une quelconque des revendications 10 à 20, dans lequel le mélange comprend en outre l'inclusion de particules élastomères dans la suspension aqueuse.

22. Procédé selon l'une quelconque des revendications 10 à 21, dans lequel le composant polymère inclut un polymère de floculation, et dans lequel a) l'agent de floculation est cationique et le polymère de floculation est anionique, ou b) l'agent de floculation est anionique et le polymère de floculation est cationique, dans lequel la quantité totale d'agent de floculation, de polymère de floculation et de liant facultatif dans le floc et le surnageant, à l'exclusion du solvant aqueux, est de 3 % à 20 % en masse, par exemple de 4 % à 16 % en masse.

23. Procédé selon l'une quelconque des revendications 10 à 22, comprenant en outre a) le revêtement d'une solution ou d'une émulsion de polymère ou d'oligomère sur la composition d'aérogel séchée, et le durcissement de la solution ou de l'émulsion pour former un revêtement sur la composition d'aérogel, b) le traitement de la composition d'aérogel avec un agent hydrophobisant, ou les deux.
